# FASCICULE DE BREVET EUROPEEN

(11) **EP 2 199 198 B1**
(45) Date de publication et mention de la délivrance du brevet: **04.07.2012**
(21) Numéro de dépôt: 09014348.8
(22) Date de dépôt: 17.11.2009
(51) Int. Cl.: B62M 11/04

(54) **Dispositif de transmission pour cycle**
Getriebeeinheit für ein Fahrrad
Transmission for bicycle

(30) Priorité: 19.12.2008 FR 0807251
(43) Date de publication de la demande: 23.06.2010
(73) Titulaire: MAVIC S.A.S., 74370 Metz-Tessy (FR)
(72) Inventeur: Mercat, Jean-Pierre, 74650 Chavanod (FR); Cretoux, Brieuc, 42700 Firminy (FR)

(56) Documents cités:
- CH-A- 253 158
- DE-A1- 19 712 444
- DE-A1-102004 045 364
- GB-A- 444 433
- US-A- 5 975 266

## Description

L'invention se rapporte aux dispositifs de transmission pour cycle. En particulier, l'invention concerne un dispositif de transmission à changement de vitesse. Le document GB444433A est considéré comme étant l'état de la technique le plus proche selon le préambule de la revendication 1.

Sur un cycle on appelle transmission l'ensemble des moyens mécaniques qui permettent de transmettre l'effort de pédalage du cycliste à la roue motrice.

Les dispositifs de transmission peuvent inclure des moyens de changement de vitesse, ou pour être plus précis des moyens de changement de braquet. De tels moyens ont été mis en oeuvre dès l'invention du vélocipède à pédales dans la deuxième moitié du XIXème siècle. Le rapport de transmission global qu'on appellera par la suite le braquet du dispositif de transmission correspond au rapport de vitesse de rotation entre « l'entrée », c'est-à-dire la vitesse de pédalage, et la « sortie », c'est-à-dire la vitesse de rotation de la roue motrice. Dans les cycles dont l'axe de pédalage n'est pas confondu avec l'axe de la roue motrice, la modification du rapport de transmission peut être réalisée soit au niveau du pédalier, soit au niveau de la roue motrice, soit aux deux endroits.

Dans un vélo classique, la roue arrière est motrice et l'axe de pédalage est placé en avant de cette dernière. Pour des raisons de clarté, dans la suite de l'exposé on parlera de braquet, lorsqu'il s'agit du rapport entre les vitesses angulaires de pédalage et de la roue arrière, tandis qu'on parlera de rapport de transmission lorsqu'on ne considère que ce qui se passe au niveau du pédalier.

Au cours des années de nombreux dispositifs de transmission incluant des moyens de changement de rapport ont été proposés par les fabricants de cycle. Les moyens de changement de rapport les plus largement utilisés comprennent un ou plusieurs plateaux dentés entraînés par les pédales en entrée et un ou plusieurs pignons dentés qui entraînent la roue arrière en sortie. Une chaîne à maillon creux relie l'entrée à la sortie. Le changement de rapport, à proprement parler, consiste à changer la position de la chaîne relativement aux pignons et/ou aux plateaux. Ce changement de position de la chaîne est réalisé grâce à un ou des dérailleurs.

Le brevet EP 1 944 230 montre notamment un dérailleur avant permettant de faire changer la position de la chaîne par rapport aux plateaux. Dans un tel dispositif, le changement de la position de la chaîne se fait sur le brin en tension de celle-ci. C'est pourquoi, il n'est pas possible, ou en tout cas pas recommandé, d'effectuer une manoeuvre du dérailleur avant lorsqu'on exerce un effort sur les pédales. Dans la pratique, avant et pendant chaque changement de rapport, l'utilisateur relâche son effort. On comprend donc la perte d'efficacité que les dérailleurs font perdre aux cyclistes.

Dans un vélo classique selon l'art antérieur et notamment dans un vélo équipé d'un dérailleur avant tel que celui décrit dans le document EP 1 944 230, le dispositif de transmission y comprend un pédalier équipé de deux ou trois plateaux avant, une chaîne, et une cassette de pignons arrière. Les moyens de changement de braquet comprennent un dérailleur avant, auquel est associée une manette de commande avant placée sur la portion gauche du guidon et un dérailleur arrière auquel est associée une manette de commande arrière placée sur la portion droite du guidon.

Les deux plateaux avant comportent respectivement 39 et 53 dents tandis que la cassette comprend 10 pignons arrière comportant respectivement 11, 12, 13, 14, 15, 16, 17, 19, 21 et 23 dents. Il s'agit là d'une configuration classique pour un vélo de route. Chaque braquet est constitué par l'association d'un plateau avant et d'un pignon arrière. Théoriquement, 20 rapports de transmission sont envisageables avec un tel dispositif (2 plateaux multipliés par 10 pignons). En pratique, on ne dispose que d'environ 16 rapports de transmission distincts comme on peut le voir dans le tableau 1.

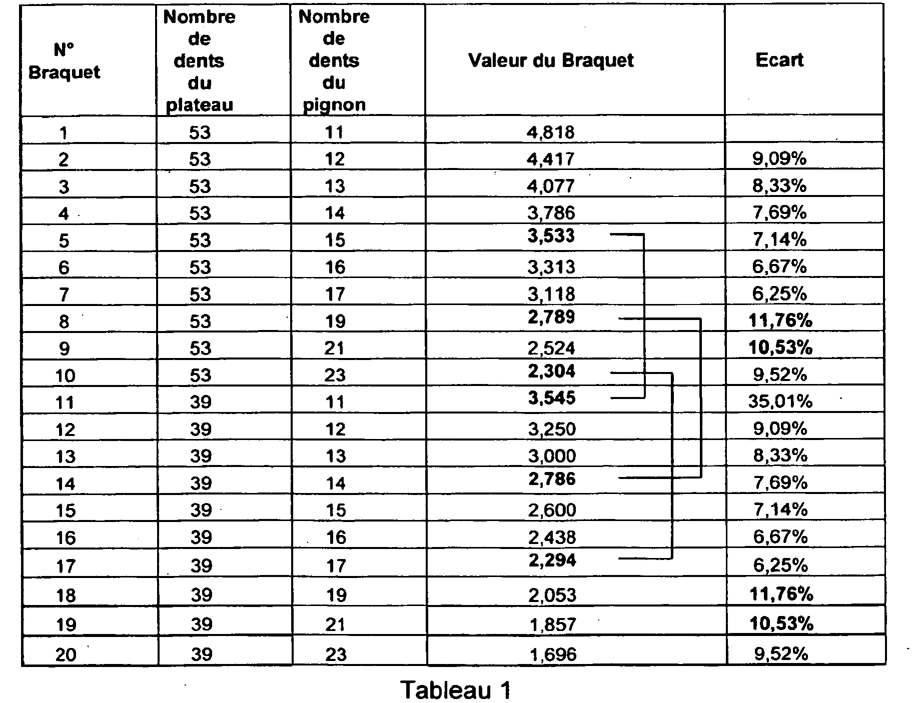

Dans le tableau 1, chaque ligne correspond à un des vingt braquets. Chacune des colonnes contient respectivement de gauche à droite, le numéro du rapport, le nombre de dents du plateau, le nombre de dents du pignon, la valeur numérique du braquet et l'écart, en pourcentage, séparant cette valeur numérique de la valeur de la ligne précédente.

Le braquet est égal au rapport du nombre de dents du plateau sur le nombre de dents du pignon.

On peut souligner plusieurs faiblesses de ce système de transmission. Tout d'abord, comme on peut le voir dans le tableau 1, on retrouve plusieurs fois les mêmes rapports de transmission. De plus, certains d'entre eux ne peuvent être exploités dans la réalité à cause du désalignement de la chaîne entre les plateaux et les pignons de la roue arrière. Cela génère des frottements de la chaîne sur le dérailleur avant qui sont extrêmement désagréables pour le cycliste (bruit), font baisser le rendement et augmentent l'usure de la chaîne. D'autre part, les transitions entre les différents rapports ne sont pas toujours très progressives. On peut estimer ceci par un pourcentage d'écart entre deux rapports consécutifs. Au-delà de 10% (en gras, dans le tableau ci-dessous), on considère que la transition n'est pas du tout progressive. Enfin, Il n'est pas toujours aisé de réaliser un changement de plateau lorsque le cycliste est en plein effort car le dérailleur avant agit sur le brin tendu de la chaîne, ce qui induit une rupture de la cadence de pédalage, pouvant être nuisible au coureur, particulièrement dans le cadre du cyclisme professionnel.

Pour finir, un pilotage optimal d'un tel système de changement de rapports n'est guère aisé pour l'utilisateur car il doit être conscient avant chaque changement de rapport du positionnement de la chaîne - quel plateau et quel pignon ?. En effet, de ce positionnement dépendra l'action de commande à effectuer - manoeuvrer la commande du dérailleur avant ? celle du dérailleur arrière ? ou les deux ?

Le brevet EP 1145947 décrit un dispositif qui améliore une partie des faiblesses des dispositifs de transmission classiques. Le dispositif en question utilise un seul plateau denté qui, parce qu'il est expansible, rempli la même fonction que deux plateaux. Cependant l'utilisation de la technologie des plateaux expansibles, nécessite la mise en place de mécanismes complexes, avec de nombreuses pièces en mouvement qui doivent supporter et transmettre le couple de pédalage. En pratique, ces systèmes n'ont jamais été développés jusqu'à offrir une alternative valable au système classique.

Avant l'invention du dérailleur avant, différentes solutions utilisant des engrenages avaient été proposées pour le changement de rapport au niveau du pédalier. Ces solutions ont été rapidement abandonnées et n'ont pas connu le succès du dérailleur car on leur reprochait notamment leur coût, la nécessité d'avoir un cadre spécifique, la fragilité et surtout un rendement médiocre. Il y a bien entendu de temps en temps de nouvelles idées qui utilisent le principe des engrenages pour modifier le braquet au niveau du pédalier. Le dispositif décrit dans le document US 4 218 931 est un pédalier démultiplicateur. Le pédalier y entraîne un pignon à denture externe qui engrène avec une couronne à denture interne excentrée par rapport au pédalier. La couronne est solidaire du plateau denté qui reçoit la chaîne de transmission. Le rapport de transmission entre la vitesse de pédalage et la vitesse de rotation du plateau est déterminé par le rapport des diamètres du pignon et de la couronne. Dans ce dispositif, le rapport de transmission est fixe et ne peut être modifié au niveau du pédalier.

Le document EP 1 980 483 décrit un pédalier avec un mécanisme de changement de rapport de transmission. Le mécanisme est un train épicycloïdal qui permet d'obtenir deux rapports de transmission. Le premier de ces rapports de transmission est égal à 1, lorsque la rotation du planétaire (le pignon à denture externe) est libre tandis que le deuxième rapport est largement supérieur à 1 lorsque la rotation du planétaire est bloquée. Un tel pédalier avec changement de rapport de transmission présente de nombreux désavantages. Tout d'abord, compte tenu des contraintes cinématiques des trains épicycloïdaux, des contraintes géométriques de l'emplacement de l'axe de pédalage sur une bicyclette, il n'est pas possible de réaliser de cette manière un pédalier ayant un rapport de transmission proche de 1, c'est-à-dire inférieur à 1,15, de préférence inférieur à 1,10. En effet, pour réaliser, avec un train épicycloïdal de rapport proche de 1, il faut que les satellites aient un nombre de dents du même ordre de grandeur que le planétaire, ce qui conduirait à avoir un pédalier de grand diamètre. Or, il est important que la garde au sol soit la plus importante possible.

D'autre part, compte tenu du nombre important de pièces mécaniques, un pédalier à train épicycloïdal est couteux, lourd et d'un rendement médiocre. D'ailleurs, actuellement, les produits existants sur le marché qui utilisent des trains épicycloïdaux sont recommandés aux vélos de montagnes dédiés aux disciplines de descente, pour lesquelles le poids n'est pas un critère si déterminant.

Enfin, du fait qu'il n'est pas possible d'obtenir un rapport de transmission proche de 1, les pédaliers à train épicycloïdaux sont difficilement exploitables sans être couplé avec un dispositif de changement de rapport de transmission placé sur la roue arrière. En effet, pour l'utilisateur, il est souhaitable que les écarts entre les braquets soient réguliers et qu'ils ne soient pas trop éloignés les uns des autres. On donnera à titre indicatif comme ordre de grandeur des écarts de 5 à 10% entre deux braquets consécutifs sur vélo de route et entre 7 et 15% en VTT.

L'objectif de l'invention est la fourniture d'un dispositif de transmission à changement de rapports pour cycle qui permet les changements de braquet.

L'objectif de l'invention est également la fourniture d'un dispositif de transmission à changement de braquet que l'utilisateur pourra, de manière simple, piloter de façon optimale.

Un autre objectif de l'invention est la fourniture d'un dispositif de transmission pour lequel le changement de rapport au niveau du pédalier ne requiert qu'un travail mécanique minime, et notamment qu'il ne soit pas nécessaire de manoeuvrer le brin tendu de la chaîne.

Les objectifs de l'invention sont atteints par la fourniture d'un dispositif de transmission pour cycle qui comprend:
- un boitier de pédalier fixe par rapport au cadre du cycle et comprenant un corps principal cylindrique centré autour d'un premier axe A1 et un corps secondaire, centré autour d'un deuxième axe A2, ledit deuxième axe A2 étant parallèle mais non confondu avec ledit premier axe A1;
- un pédalier monté rotatif selon le premier axe A1 par rapport audit corps principal et comprenant: une paire de manivelle, un premier élément denté circulaire et un deuxième élément denté circulaire, tous deux centrés sur le deuxième axe A1;
- un plateau monté rotatif selon le deuxième axe A2 par rapport au corps secondaire et comprenant un troisième élément denté circulaire et un quatrième élément denté circulaire, tous deux centrés sur l'axe A2;
- ledit premier élément denté et ledit troisième élément denté, respectivement ledit deuxième élément denté et ledit quatrième élément denté, constituant un premier train d'engrenage, respectivement un deuxième train d'engrenage;
- l'un au moins desdits premier, deuxième, troisième et quatrième éléments dentés étant un élément à denture interne;
- des moyens de blocage débrayables sont prévus pour bloquer alternativement d'une part, la rotation du premier élément denté par rapport au pédalier ou la rotation du troisième élément denté par rapport au plateau et d'autre part, la rotation du deuxième élément denté par rapport au pédalier ou la rotation du quatrième élément denté par rapport au plateau.

Dans un mode de réalisation de l'invention, les moyens de blocage débrayable comprennent au moins un premier et un deuxième cliquet qui coopèrent avec une pluralité d'encoches; ledit premier cliquet permettant la rotation unidirectionnelle dudit premier élément denté par rapport au pédalier ou dudit troisième élément denté par rapport au plateau, et ledit deuxième cliquet permettant la rotation unidirectionnelle dudit deuxième élément denté par rapport au pédalier ou du quatrième élément denté par rapport au plateau.

De préférence, l'un desdits, au moins deux, cliquets, est un cliquet piloté par des moyens de pilotage commandable par l'utilisateur et en ce que l'autre desdits, au moins deux, cliquets est un cliquet libre.

De préférence, un mécanisme d'actionnement dudit cliquet piloté est prévu, lequel mécanisme comprenant une palette prévue pour sortir ledit cliquet piloté d'une position en prise dans une desdites encoche ainsi qu'une came pouvant prendre deux positions stables sous l'action desdits moyens de pilotage.

Dans un mode de réalisation de l'invention, ledit premier élément denté est une grande couronne à denture interne, ledit deuxième élément denté est une petite couronne à denture interne, ledit troisième élément denté est un grand pignon à denture externe et ledit quatrième élément denté est un petit pignon à denture externe. Ladite pluralité d'encoche peut alors être placée d'une part sur la grande couronne et d'autre part sur ladite petite couronne.

Dans un autre mode de réalisation, ledit premier élément denté est un pignon à denture externe, le deuxième élément denté est une couronne à denture interne, le troisième élément denté est une couronne à denture interne et le quatrième est un pignon à denture externe. Ladite pluralité d'encoche peur alors être placée d'une part sur le troisième élément denté et d'autre part sur le quatrième élément denté.

Les objectifs de l'invention sont également atteints par la fourniture d'un cycle équipé d'un dispositif de transmission tel que décrit ci-dessus.

D'autres caractéristiques et avantages de l'invention seront mieux compris à l'aide de la description qui va suivre, en regard des dessins annexés illustrant, de façon non limitative, comment l'invention peut être réalisée, et dans lesquels :
La figure 1 est une vue d'un vélo selon l'invention.
La figure 2 est le schéma cinématique d'un dispositif selon un premier mode de réalisation de l'invention.
La figure 3 est un vue de droite du premier mode de réalisation.
La figure 4 est une vue de gauche partielle du premier mode de réalisation.
La figure 5 est une vue de droite partielle du premier mode de réalisation.
La figure 5a est une vue en coupe du premier mode de réalisation.
La figure 6 est une vue en perspective montrant les deux trains d'engrenage du premier mode de réalisation.
Les figures 7 et 8 sont des vue de gauche de la platine et des couronnes selon le premier mode de réalisation.
La figure 9 est une vue en perspective éclatée d'un mécanisme d'actionnement.
Les figures 10, 11 et 12 sont des vues partielles en perspective du dispositif, alors que ce dernier se trouve dans un premier état.
Les figures 13, 14 et 15 sont des vues partielles en perspective du dispositif, alors que ce dernier se trouve dans un deuxième état.
La figure 16 est le schéma cinématique d'un dispositif selon un deuxième mode de réalisation de l'invention.
La figure 17 est une vue de gauche partielle du deuxième mode de réalisation.
La figure 18 est une vue en coupe du deuxième mode de réalisation.
La figure 19 est une vue de droite partielle du deuxième mode de réalisation.
La figure 20 est une vue en perspective montrant les deux trains d'engrenage du deuxième mode de réalisation.

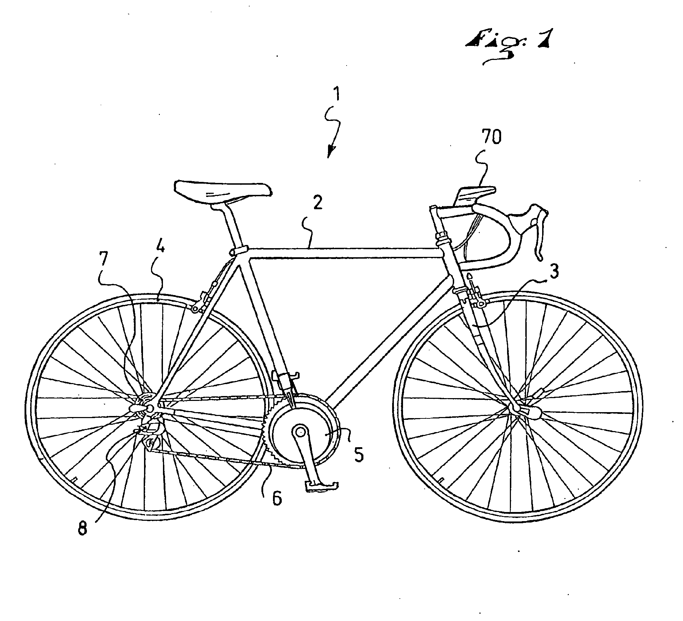

La figure 1 montre un vélo 1 équipé d'un dispositif de transmission selon un premier mode de réalisation de l'invention. Le vélo 1 comprend de manière connue un cadre 2 sur lequel est montée une roue arrière 4, une fourche 3, montée pivotante sur le cadre 2 et sur laquelle sont montés une roue avant et un guidon. La transmission comprend un pédalier 5, une chaîne 6 et une cassette de pignon arrière 7 montée sur la roue arrière. La cassette est solidaire en rotation, dans le sens de la traction, avec la roue arrière par l'intermédiaire d'un moyeu à roue libre.

Il est a noter que la présence d'une cassette à pignons arrière n'est pas une caractéristique limitative de l'invention et qu'on peut envisager des modes de réalisation de l'invention dans lesquels la cassette de pignons est remplacée par un seul pignon celui-ci étant ou non associé à un moyeu comportant un mécanisme intégré de changement de rapport du type de celui décrit dans la demande de brevet EP 1 849 700.

On verra plus tard que le dispositif de l'invention est équipé de roue libre au niveau du pédalier, si bien qu'il n'est pas nécessaire que la cassette de pignons (ou le pignon) de la roue arrière soit équipé, lui aussi, de mécanismes de roue libre.

Dans l'exemple décrit, la cassette 7 est associée à un dérailleur 8 pouvant être commandé électriquement. La cassette 7 comprend 8 pignons dont les nombres de dents sont les suivants 12, 14, 16, 18, 21, 24, 28 et 32. Bien entendu, tant le nombre de pignons, que le nombre de dents que chacun d'eux comportent ne constituent des limitations. Il s'agit d'exemples non limitatifs destinés à démontrer un des avantages de l'invention au regard de l'art antérieur.

Le dispositif de transmission comprend également des moyens de commande 70 qui peuvent être placés sur le guidon du vélo ou à un autre endroit sur le cadre. Ces moyens de commande comprennent une interface homme/machine, des moyens de traitement des données ainsi que des manettes d'actionnement droite et gauche comme décrit par exemple dans le brevet FR 2851222.

Le dispositif de transmission selon l'invention est décrit ici avec une chaîne de transmission à maillons. Bien entendu, il ne s'agit d'une caractéristique limitative de l'invention. En effet, on pourra utiliser le dispositif de l'invention en combinaison avec tout autre moyen pour transmettre le couple de pédalage à la roue motrice comme par exemple une courroie.

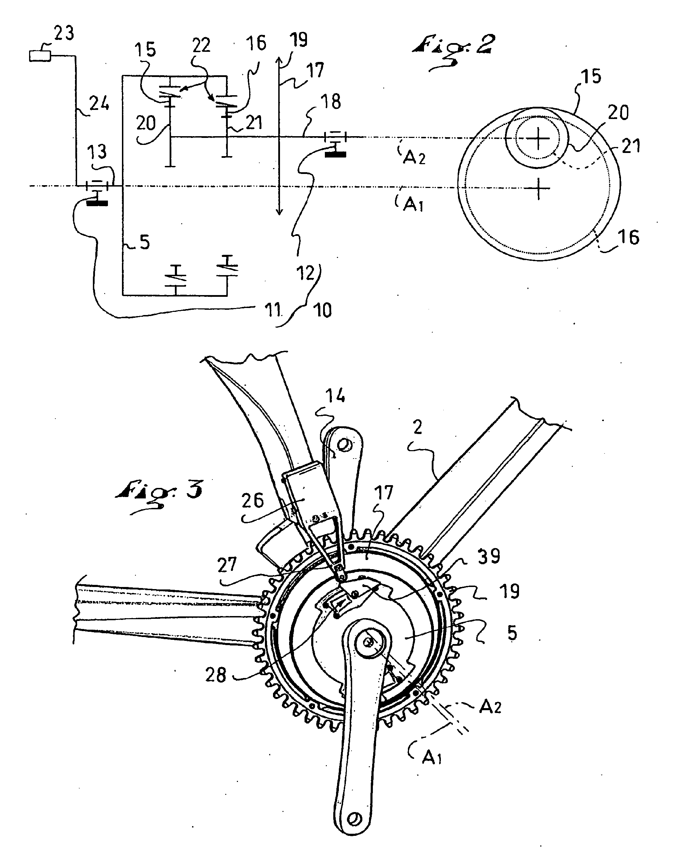

La figure 2 représente le schéma cinématique du premier mode de réalisation de l'invention. Conformément à l'invention le dispositif de transmission comprend un boitier 10 de pédalier, un pédalier 5 et un plateau 17.

Le boîtier 10 qui est fixe par rapport au cadre du cycle et qui est constitué par un corps principal 11 centré autour d'un premier axe A1 et un corps secondaire 12, centré autour d'un deuxième axe A2, ledit deuxième axe A2 étant parallèle mais non confondu audit premier axe A1.

Le pédalier 5 est monté par l'intermédiaire d'un arbre 13 de pédalier à l'intérieur du corps principal 11. Les manivelles 24, prévues pour recevoir chacune une pédale 23, sont également fixées sur l'arbre de pédalier (seule la manivelle droite est représentée à la figure 2).

Le pédalier comprend en outre un premier élément denté 15, centré sur l'axe A1, et un deuxième élément denté 16, également centré sur l'axe A1. Le premier élément denté 15, ainsi que le deuxième élément denté 16 sont tous deux constitués sous la forme de couronne à denture interne.

Le plateau 17 est monté rotatif selon le deuxième axe A2 par rapport au corps secondaire 11 par l'intermédiaire d'un moyeu central 18. Il comprend en outre un troisième élément denté 20, centré sur l'axe A2 et un quatrième élément denté 21, également centré sur l'axe A2. Le troisième élément denté 20 ainsi que le deuxième élément denté 21 sont tous deux constitués sous la forme de pignons à denture externe.

A tout moment, le premier et le troisième élément denté, respectivement le deuxième et le quatrième élément denté, sont en prise.

Etant donné que les premier et deuxième éléments dentés 15, 16 sont constitués par des éléments à denture interne, il est possible que les troisième et quatrième éléments dentés soient logés dans les premier et deuxième éléments dentés. Ainsi l'axe A2 est excentré par rapport à l'axe A1 d'une valeur limitée, en tout cas d'une valeur inférieure au rayon du plus grand des éléments dentés. Dans une boîte de vitesse classique, dans laquelle tous les éléments dentés sont des éléments à denture externe, ce ne peut pas être le cas. Cette disposition permet une plus grande compacité de la construction.

D'autre part, la combinaison denture interne / denture externe a pour conséquence que l'arbre de sortie du dispositif de transmission, c'est-à-dire le plateau, tourne dans le même sens que l'arbre d'entrée, c'est-à-dire le pédalier.

Pour une meilleure compréhension, on a repris dans la partie droite du schéma, en vue de face, les diamètres primitifs du premier et du troisième élément denté en trait plein ainsi que ceux du deuxième et du quatrième élément denté en trait pointillé.

Un anneau denté 19 centré sur le deuxième axe A2, fixé sur le plateau 17, est apte à coopérer avec la chaîne de transmission reliant la zone de pédalage à un pignon arrière de la roue arrière.

Des moyens de blocage 22 débrayables sont ménagés pour bloquer alternativement la rotation du premier élément denté 15 par rapport au pédalier 5, le deuxième élément denté 16 restant libre de tourner, ou du deuxième élément denté 16 par rapport au pédalier, le premier élément denté restant libre de tourner.

Un tel système de transmission autorise deux rapports de transmission au niveau du pédalier. Le premier rapport, qu'on appellera par la suite le « petit rapport », est obtenu lorsque la rotation du premier élément denté 15 est bloquée en rotation par rapport au pédalier. Le rapport de transmission est alors égal au quotient du nombre de dents du premier élément denté 15 sur le nombre de dents du troisième élément denté 20. Le deuxième rapport, « le grand rapport » est obtenu lorsque la rotation du deuxième élément denté 16 est bloquée en rotation par rapport au pédalier 5. Le rapport de transmission est alors égal au quotient du nombre de dents du deuxième élément denté 16 sur le nombre de dent du quatrième élément denté 21.

On notera que le dispositif de transmission selon l'invention n'est pas limité à deux rapports de transmission au niveau du pédalier. En effet, le dispositif peut comprendre des éléments dentés supplémentaires de façon à disposer d'un troisième, quatrième, etc... train d'engrenage.

Dans un mode de réalisation alternatif non représenté, les moyens de blocage ne sont pas ménagés pour bloquer la rotation du premier et du deuxième élément denté mais pour bloquer la rotation du troisième élément denté 20 et du quatrième élément denté 21 par rapport au plateau 17. Les premiers et deuxièmes éléments dentés 15 et 16 seraient alors solidaires du pédalier. Il est également tout à fait possible de bloquer la rotation d'un élément denté par rapport au plateau 17 et d'un élément denté par rapport au pédalier 5.

La figure 3 montre une vue partielle du vélo selon le premier mode de réalisation de l'invention. On y voit une partie du cadre 2 ainsi qu'une partie du dispositif de transmission, la chaîne 6 et les pédales n'y sont pas représentées.

Le dispositif de transmission comprend un pédalier 5, un plateau 17, un mécanisme d'actionnement fixé sur le pédalier 5 ainsi que des moyens de pilotage 26.

Les moyens de pilotage 26 permettent de changer les rapports de transmission. Ils sont fixés sur le tube de selle du cadre 2. Ils comprennent un bec 27 qui coopère avec des cames 39 appartenant au mécanisme d'actionnement 28.

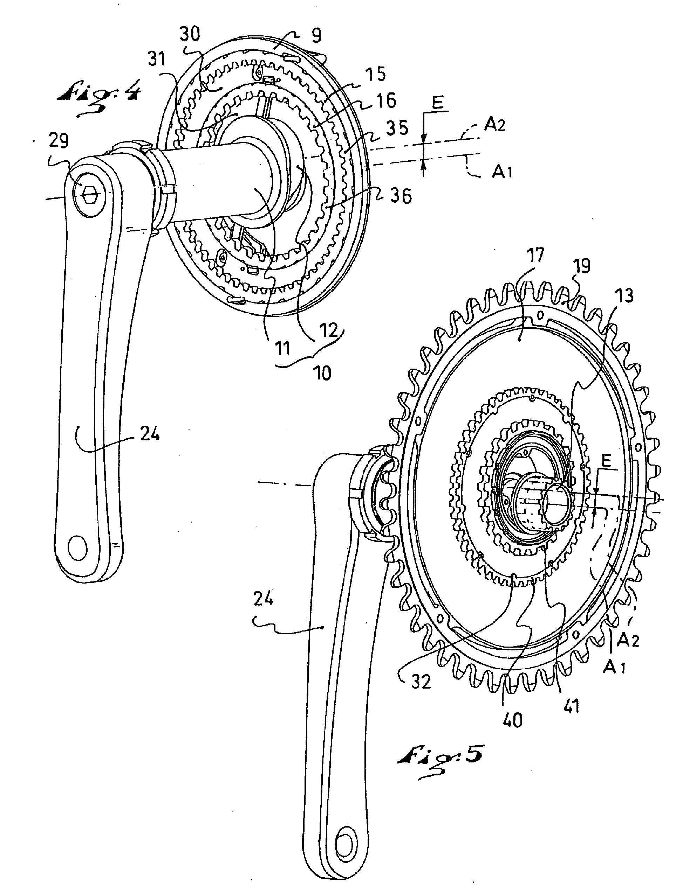

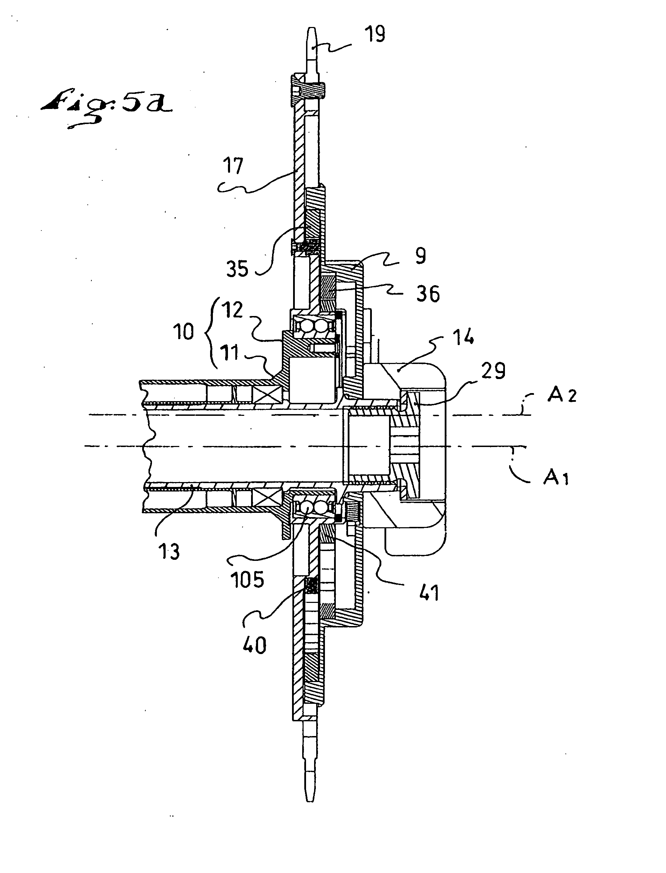

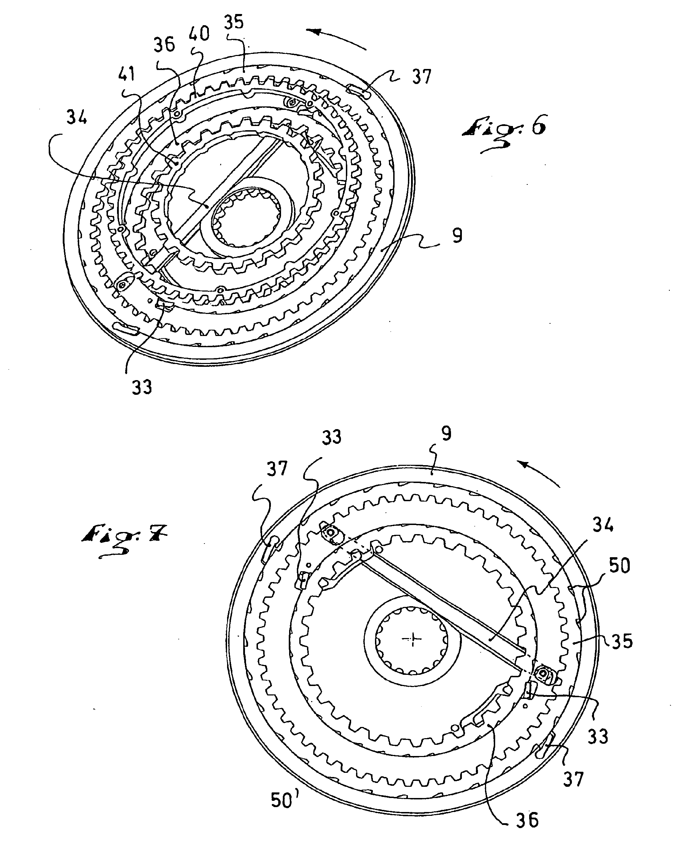

Le pédalier 5 est un premier sous-ensemble monté rotatif par rapport au cadre 2 selon un premier l'axe A1. Il comprend un arbre 13 aux extrémités duquel deux zones cylindriques cannelées sont ménagées. Le pédalier comprend également deux manivelles et une platine 9. L'extrémité cannelée gauche de l'arbre 13 sert à la fixation de la manivelle gauche 24. Dans toute la suite de l'exposé, les adjectifs "droit(e)" et "gauche" s'entendent par rapport au sens d'avancement du vélo. L'extrémité cannelée droite de l'arbre sert à la solidarisation de la platine 9 et de la manivelle droite 14 (cf. figures 5 & 6).

Le plateau 17 constitue un deuxième sous-ensemble monté rotatif par rapport au cadre 2 selon un deuxième axe A2, lequel est parallèle mais distinct du premier axe A1. La distance séparant les deux axes A1 et A2 est appelée, excentricité, E. Dans le premier mode de réalisation on choisit une excentricité comprise entre 6 et 11 mm, de préférence égale à 7,5 mm.

Le plateau 17 comporte un anneau denté 19, fixé à sa périphérie. L'anneau denté est prévu pour coopérer avec la chaîne de transmission 6. L'anneau denté a une forme circulaire, dont le centre coïncide avec l'axe A2. Ainsi lorsque le plateau 17 est entraîné en rotation par le pédalier 5, l'anneau denté 19 tourne autour de l'axe A2. On notera que l'anneau 19 pourra aussi avoir une forme qui n'est pas rigoureusement circulaire, par exemple elliptique.

Il est à noter que l'axe A2 est placé plus haut que l'axe A1. Ainsi, la garde au sol, c'est-à-dire la distance séparant le point le plus bas de l'anneau 19 du sol, est améliorée par rapport au vélo disposant de dispositif classique de transmission.

La figure 4 montre une vue en perspective (3/4 gauche) du "boîtier de pédalier" 10 et du premier sous-ensemble que constitue le pédalier 5. Le boîtier 10 comprend un corps principal 11 et un corps secondaire 12. Le corps principal 11 correspond à un boîtier de pédalier classique. Il s'agit d'une douille de forme cylindrique qui est insérée dans une ouverture de forme correspondante ménagée dans le cadre 2. Le corps secondaire 12 est placé dans la continuité du corps principal, sur son coté droit. Les contours extérieurs du corps secondaire prennent la forme d'un palet cylindrique dont l'axe est parallèle mais excentré d'une valeur E par rapport à l'axe du corps principal 11.

L'arbre 13 (cf. fig. 5) du pédalier 5 est monté à l'intérieur du boîtier 10, de manière connue grâce à des paliers à roulements. Les extrémités cannelées de l'arbre 13 dépassent de part et d'autre du boîtier, elles servent à solidariser en rotation les manivelles et la platine 9. La manivelle gauche 24, visible sur la figure 4 est fixée de manière connue sur l'arbre 13 par l'intermédiaire de la vis 29. La manivelle droite 14, visible sur la figure 3 est également fixée grâce à une vis. La platine 9 est "prise en sandwich" entre un épaulement ménagé sur l'arbre 13 et la manivelle droite 14.

Comme on peut le voir à la figure 4, la platine 9 comprend sur sa face gauche une grande cuvette 30 circulaire, centrée sur l'axe A1, de diamètre légèrement inférieur au diamètre extérieur de la platine 9. Une petite cuvette 31 circulaire, centrée sur l'axe A1, est ménagée au fond de la grande cuvette.

A l'intérieur de la grande cuvette 30, respectivement de la petite cuvette 31, est reçu le premier élément denté 15, respectivement le deuxième élément denté 16. Dans ce mode de réalisation de l'invention, le premier élément denté 15, respectivement le deuxième élément denté 16, prennent la forme d'une grande couronne dentée 35, respectivement d'une petite couronne dentée 36. Dans la suite de l'exposé du premier mode de réalisation, nous ne nous référerons plus qu'à grande et petite couronne.

La petite et la grande couronne sont libres en rotation par rapport à la platine 9; elles sont arrêtées en translation axiales, d'une part, par le fond des cuvettes et, d'autre part, comme nous le verrons plus loin par la face droite du plateau 17.

Conformément à l'invention, des moyens de blocage 22 débrayables sont ménagés pour permettre de bloquer la rotation de la grande couronne 35 ou de la petite couronne 36 par rapport à la platine 9, c'est-à-dire au pédalier 5.

La figure 5 montre en vue en perspective droite, le deuxième sous-ensemble que constitue le plateau 17. Ce dernier a la forme d'un disque circulaire centré sur l'axe A2. Au centre du plateau 17 un alésage est prévu pour recevoir la bague extérieure d'un palier à roulement, la bague intérieure duquel étant insérée sur la surface extérieure du corps secondaire 12.

Un anneau denté 19 est fixé sur le périmètre extérieur du plateau 17 par l'intermédiaire de cinq vis de fixation (non représentées). Cet anneau denté reçoit la chaîne de transmission.

La face droite du plateau 17, celle qui se trouve en vis-à-vis de la face gauche de la platine 9, comprend un premier épaulement de grand diamètre contre lequel est fixé un troisième élément denté 20 et un deuxième épaulement de diamètre inférieur contre lequel est fixé un quatrième élément denté 21.

Dans ce mode de réalisation de l'invention, le troisième élément denté 20, respectivement le quatrième élément denté 21, prennent la forme d'un grand pignon denté, respectivement d'un petit pignon denté.

Le grand et le petit pignon possèdent sur le périmètre intérieur une pluralité de demi-lunes 32 qui viennent s'encastrer dans des cavités de forme correspondante ménagées dans les épaulements du plateau 17 afin de les solidariser en rotation avec ce dernier. Le grand pignon est arrêté en translation par des vis de fixation 74. Le petit pignon est lui arrêté par un circlips 23 qui a également la fonction de bloquer la bague extérieure du roulement du plateau 17. Pour une meilleure reprise des efforts latéraux, on utilise un roulement à double rangée de billes. On se réfèrera à la vue en coupe de la figure 5a pour une meilleure compréhension du montage.

Les deux couronnes et les deux pignons sont réalisés en acier, en titane, alliage, etc...

La figure 6 montre principalement, en perspective vue de la gauche, la platine 9, les couronnes et les pignons. La grande couronne 35 et le grand pignon 40 sont destinés à engrener ensemble et constituent le premier train d'engrenage, tandis que la petite couronne 36 et le petit pignon 41 constituent le deuxième train.

On appelle respectivement R1, R2, R3, R4 les rayons primitifs du premier, deuxième, troisième, quatrième élément denté; Z1, Z2, Z3 et Z4 leur nombre de dents; respectivement k1 = Z1/Z3, k2 = Z2/Z4, les rapports de transmission du premier train, du deuxième train; et respectivement m1, m2 les modules du premier, du deuxième train.

Bien entendu compte tenu de la disposition géométrique des pignons et des couronnes, les différences "R1 - R3" et "R2 - R4" sont égales à la valeur de l'excentricité E.

Dans le premier mode de réalisation de l'invention on choisi les modules m1 et m2 de telle façon que le quotient Q des rapports de transmission k1 et k2 (Q=k2/k1) soit proche de 1, de préférence compris entre 1,06 et 1,08.

Dans l'exemple décrit ici, on a choisi un module m1 de 1,875 mm et un module m2 égal à 2,5 mm pour des rayons primitifs R1 et R2 des deux couronnes égaux à 54,4 mm et 38,8 mm et des rayons primitifs des pignons égaux à 46,9 mm et 31,3 mm. Par conséquent la grande couronne 35 comprend Z1 = 58 dents et la petite couronne 36 en comprend Z2 = 31, tandis que le grand pignon 40 comprend Z3 = 50 dents et le petit pignon 41 en comprend Z4 = 25 dents. Dans ces conditions le rapport de transmission du 1^{er} train d'engrenage vaut k1 = 1,16 ; celui du 2^{ème} train vaut k2 = 1,24 et le quotient Q vaut environ 1,07.

Toutes les valeurs précédentes constituent des choix particulièrement avantageux pour la réalisation d'un dispositif de transmission selon l'invention. Elles sont reprises dans le tableau 2.

**Tableau 2**

| | | **pédalier** | **plateau** |
|---|---|---|---|
| | | 1^{er} élément denté (grande couronne) | 3^{ème} élément denté (grand pignon) |
| "Petit rapport" | Rayon | R₁ = 54,375 mm | R₃ = 46,875 mm |
| | Nbre de dents | Z₁ =58 | Z₃ = 50 |
| | Module | m₁ = 1,875 mm | |
| | Rapport de transmission | K₁ = 58/50 =116 | |
| | Encoches roue libre | N₁ = 29 | |
| | | 2^{ème} élément denté (petite couronne) | 4 ^{ème} élément denté (petit pignon) |
| "Grand rapport" | Rayon | R₂ = 38,75 mm | R₄ = 31,25 mm |
| | Nbre de dents | Z₂ = 31 | Z₄ = 25 |
| | Module | m₂ = 2,5mm | |
| | Rapport de transmission | K₂ = 31/25 = 1,24 | |
| | Encoches roue libre | N₂ = 31 | |
| Quotient des rapports de transmission | | Q = K2/K1 = (31x50)/(25x58) = 31/29 = N2/N1 | |

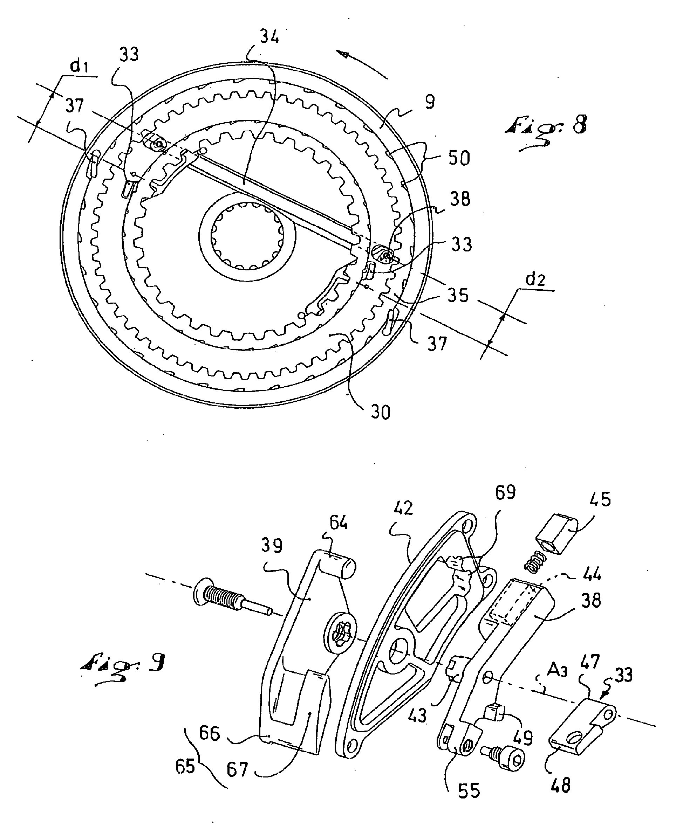

Conformément à l'invention, le dispositif de transmission comprend également des moyens de blocage 22 débrayable alternatif de la grande 35 ou de la petite couronne 36 par rapport à la platine 9 du pédalier 5. Les moyens de blocage 22 sont constitués par la coopération de plusieurs cliquets avec des encoches ménagées sur le pourtour des couronnes. Plus précisément et comme on peut le voir aux figures 7 et 8, ils comprennent deux cliquets pilotés 33 et deux cliquets libres 37. Les cliquets pilotés 33 ont pour but de bloquer la rotation de la petite couronne 36, et les cliquets libres 37 celle de la grande couronne 35.

Les moyens de blocage 22 permettent la connexion et la déconnection des deux trains d'engrenages au pédalier. Pour avoir un fonctionnement totalement exclusif, lorsqu'un des trains d'engrenages est connecté, c'est-à-dire que la grande couronne, respectivement la petite couronne, est bloquée, alors l'autre doit être déconnectée, c'est-à-dire que la petite couronne, respectivement la grande doit être en roue libre.

Dans l'exemple décrit ici, les moyens de blocage débrayables, c'est-à-dire des roues libres sont mis en place entre les couronnes et le pédalier. Il ne s'agit là que d'un choix lié aux options retenues pour l'intégration. En effet, il eut été possible de fixer les couronnes vis-à-vis du pédalier et de prévoir des moyens de blocage débrayables entre les pignons et le plateau.

Comme dans une roue libre de moyeu arrière, les cliquets utilisés permettent la rotation unidirectionnelle des couronnes par rapport au pédalier dans le sens de pédalage. Le sens de pédalage est représenté aux figures 7 et 8 par une flèche orientée dans le sens trigonométrique. Dans ce sens le pédalier est susceptible d'entraîner les couronnes, dans le sens contraire il ne le peut pas.

Comme on peut voir, la fonction de roue libre nécessaire à un dispositif de transmission pour cycle peut être assurée par l'ensemble pédalier/plateau. On pourra alors se contenter de mettre sur la roue motrice des pignons fixes.

Les cliquets libres 37 fonctionnent à la manière de cliquet utilisés dans un moyeu de roue de bicyclette à roue libre. Ils sont constitués d'une portion cylindrique et d'un bras d'extrémité. La portion cylindrique est reçue dans un évidement de forme complémentaire ménagée dans la platine 9 au voisinage des bords de la grande cuvette 30 dans laquelle est placée la grande couronne 35, définissant ainsi un axe de pivotement du cliquet. Le bras d'extrémité est reçu dans une cavité de la platine suffisamment grande pour qu'il ait la liberté de pivoter entre une position de blocage et une position de retrait. Dans la position de blocage (figure 8), le bras d'extrémité fait saillie de ladite cavité jusqu'à pénétrer dans une des encoches 50 ménagées sur la grande couronne 35. Dans la position de retrait (figure 7), il est entièrement contenu dans la cavité et n'obstrue pas la rotation de la grande couronne par rapport à la platine 9. Un ressort (non représenté) rappelle automatiquement le bras d'extrémité du cliquet dans la position de blocage.

Afin d'équilibrer les efforts transmis entre la platine 9 et la grande couronne 35, deux cliquets libres 37 sont disposés sur la platine, dans des positions respectives sensiblement diamétralement opposées l'une de l'autre. Etant donné qu'on souhaite que les deux cliquets libres 37 soient simultanément en prise dans les encoches 50, leur placement l'un par rapport à l'autre dépend du nombre d'encoche. Si celui-ci est pair, ils peuvent être diamétralement placés. En revanche, s'il y a un nombre impair d'encoche, on observera un décalage.

De la même façon, deux cliquets pilotés 33 sont disposés sur la platine 9, afin de bloquer la rotation de la petite couronne 36. Dans ce cas, les deux cliquets pilotés 33 sont synchronisés l'un avec l'autre grâce à une tringle 34. Chacun de ces cliquets pilotés est associé à un mécanisme d'actionnement 28 que nous allons décrire en détail dans les paragraphes qui suivent en relation aux figures 9, 10 et 11.

La figure 9 montre une perspective éclatée des éléments constituant le mécanisme d'actionnement 28.

Le mécanisme d'actionnement 28 comprend un doigt 38 et une came 39. Le doigt 38 est reçu dans un logement de la platine qui s'ouvre principalement sur la face droite de celle-ci. Le logement est fermé par un capot 42, fixé par trois vis à la platine 9 (cf. fig. 3).

La came 39 comprend une plaque de forme essentiellement triangulaire définissant trois pointes. La première de ces pointes est percée d'un trou cylindrique comportant des cannelures. Les deux autres pointes comportent chacune un ergot.

Le capot 42 est percé d'un trou cylindrique dans lequel est inséré un plot 43 cylindrique creux issu du coté droit du doigt 38. Des cannelures sont ménagées à l'extrémité du plot 43. Les cannelures de la came 39 et celles du doigt 38 sont complémentaires et quand elles sont engagées les unes dans les autres, elles assurent la solidarisation en rotation de la came et du doigt de part et d'autre du capot. Une vis dont la tête prend appui sur la came et qui est vissée dans le plot 43, complète la solidarisation de la came, du doigt et du capot 42, la came et le doigt étant animées d'un mouvement de pivot par rapport au capot autour d'un axe A3.

L'extrémité de la vis réalise également la liaison pivot du cliquet piloté 33 et du doigt. D'autre part, afin que les efforts de la couronne sur le cliquet piloté 33 ne passent pas uniquement dans la vis puis dans le doigt, le cliquet piloté 33 est également reçu dans un logement ménagé dans la platine.

Le doigt 38 comporte également une chambre 44 dans laquelle un piston 45 peut coulisser. La tête du piston est susceptible d'être indexée dans deux entailles, lorsque le piston est maintenu en position saillante. Un ressort maintien le piston en position saillante. Les deux entailles 69 permettent de définir deux positions stables dans le mouvement de rotation du doigt, que nous appellerons position haute et position basse.

Le cliquet piloté 33 comprend une base 47 et un bras 48. La base du cliquet piloté 33, est montée pivotante par rapport au doigt 33 autour du même axe A3. Ainsi le bras 48 est susceptible de pivoter entre une position engagée (figure 7) où le bras vient en prise dans une des encoches 50' de la petite couronne 36 et une position dégagée (figure 8) où le bras n'obstrue pas la rotation de la petite couronne 36 par rapport à la platine 9. Un ressort (non représenté) force le cliquet piloté 33 en position engagée.

Le doigt 38 comprend également une palette 49 placée sous une partie du bras 48 du cliquet piloté 33, sous la partie droite. Le positionnement de cette palette 49 est tel que lorsque le doigt 38 est en position basse (figure 7), la palette n'empêche pas la rotation du cliquet piloté dans le sens imposé par le ressort jusqu'à ce que le bras 48 viennent s'encastrer dans une des encoches 50' de la petite couronne 36. En revanche, lorsque le doigt passe en position haute (figure 8), la palette 49 soulève le bras 48 suffisamment pour que ce-dernier ne soit plus en prise dans les encoches 50' et par conséquent n'obstrue plus le mouvement de rotation de la petite couronne 36 par rapport à la platine 9.

Le doigt 38 comprend également des brides 55 servant à la fixation de la tringle 34 prévue pour synchroniser entre eux les deux mécanismes d'actionnement. Il est à noter que la position des brides de fixation n'est pas la même sur les deux doigts 38. En effet, bien que les deux mécanismes d'actionnement soient sensiblement diamétralement opposés, il faut s'assurer que la tringle 34 les reliant ne passe pas par la partie centrale de la platine 9 de façon à ce qu'elle passe à coté de l'arbre et que la rotation angulaire des deux doigts soit sensiblement la même en valeur et en sens de rotation. On cherche donc à avoir les deux dimensions d1 et d2 de la figure 8 très proches.

Le passage du doigt 38 de la position basse à la position haute et vice versa est assuré par la collaboration des deux ergots portés par la came 39 et du bec 27 des moyens de pilotage 26.

Les deux ergots sont situés à la même distance de l'axe A3. Ils n'ont cependant pas la même forme et n'ont pas la même hauteur par rapport à la came. Le premier ergot 64 a une forme simple et il est le moins haut des deux. Le deuxième ergot 65 comprend une tige 66 ayant une hauteur au moins égale à celle du premier ergot 64 et une tête 67 ayant une surface de roulage. Il est à noter, nous verrons pourquoi plus loin, que la tige 66 est en retrait par rapport à la tête selon une direction radiale à l'axe A3.

Les moyens de pilotage 26 comprennent un socle 51 lequel est fixé sur le tube de selle du cadre de manière connue grâce à un collier 53 ; un moteur 52 immobilisé sur des brides 55 issus du socle 51 et un couvercle 56.

Le couvercle 56 est fixé sur le socle 51 avec la possibilité de pivoter par rapport à ce dernier autour d'un axe A4 contenu dans un plan parallèle à ceux du pédalier 5 et du plateau 17. Pour assurer ce pivotement, le socle 51 comprend, dans sa partie supérieure, deux montants 54, chacun des deux montants 54 étant percé selon l'axe A4. Les deux parois 73 du couvercle 56 sont également percées dans leur partie supérieure selon l'axe A4. Une goupille 57, insérée dans les quatre perçages, assure le montage en pivot du couvercle 56 sur le socle 51.

Le mouvement de pivot du couvercle est actionné grâce au moteur 52. Une biellette 58 est fixée sur l'arbre de sortie de ce dernier, l'extrémité de cette biellette est excentrée d'environ 6 mm. Un coulisseau 59 est monté à l'extrémité de la biellette 58 avec la possibilité de pivoter.

Le coulisseau 59 est reçu dans une glissière 60 ménagée dans une paroi 73 du couvercle 56. Ainsi, la rotation de la biellette actionnée par le moteur fait pivoter le couvercle 56 entre une première position appelée position déployée et une deuxième position appelée position rabattue.

Les positions rabattue et déployée sont précisément indexées grâce à des vis de butée adéquates.

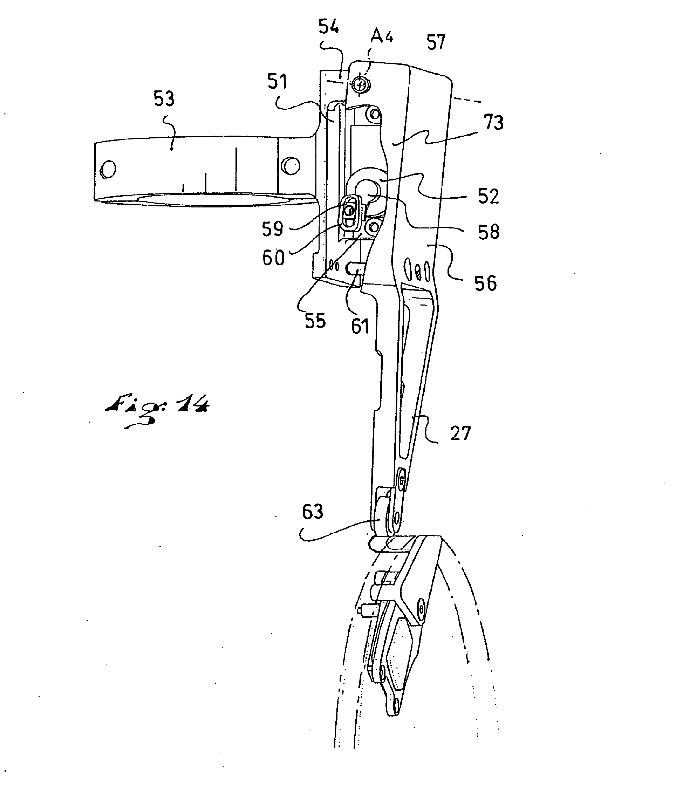

Une première vis de butée 61, vissée dans le couvercle 56, vient prendre appui sur le socle 51 lorsque le couvercle est en position rabattue. Une vis de pression empêche cette vis de se desserrer (cf. fig. 14).

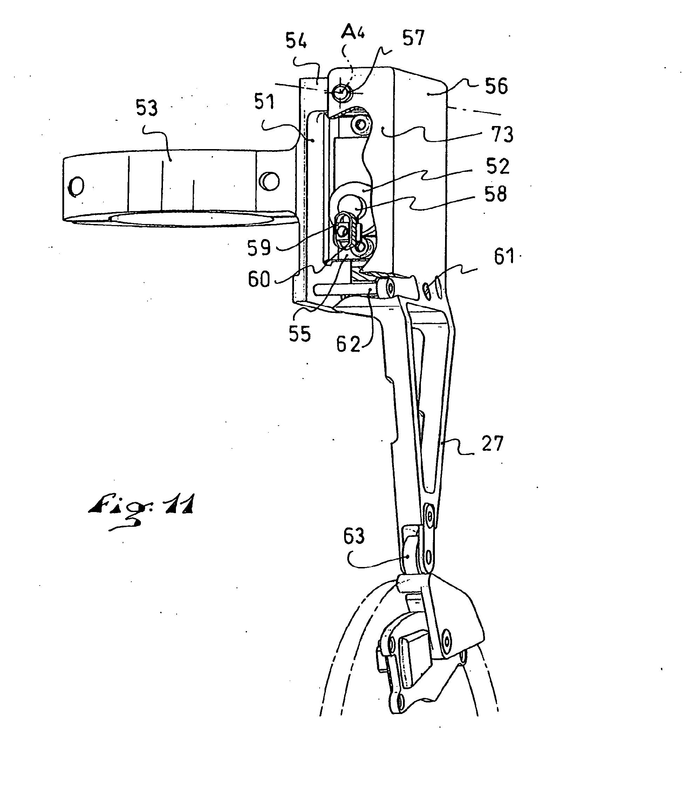

Une deuxième vis de butée 62, à tête cylindrique est, quant à elle, vissée dans le socle 51, avec un contre-écrou qui maintient la tête à une certaine distance du socle. Cette deuxième vis de butée 62 est reçue dans un trou épaulé ménagé dans le couvercle. Lorsque le couvercle est en position déployée, la tête de la deuxième vis de butée 62 est en appui sur l'épaulement du couvercle 56, empêchant ce dernier de se déployer plus (cf. fig. 11 ).

Le couvercle comprend en outre un bec 27 dirigé vers le bas, à l'extrémité inférieur duquel est monté un galet 63 roulant. Le galet 63 est prévu pour venir alternativement en contact avec l'un des deux ergots portés par la came 39.

Etant donné que le galet 63 peut prendre deux positions et du fait de la rotation du pédalier 5, alors, dans le référentiel du pédalier, le galet 63 est alternativement sur une première trajectoire circulaire 71 ou sur une deuxième trajectoire circulaire 72.

Ces deux trajectoires circulaires sont sensiblement de même diamètre et centrées sur l'axe A1 du pédalier. En revanche, elles sont placées dans deux plans parallèles au plan du plateau 17.

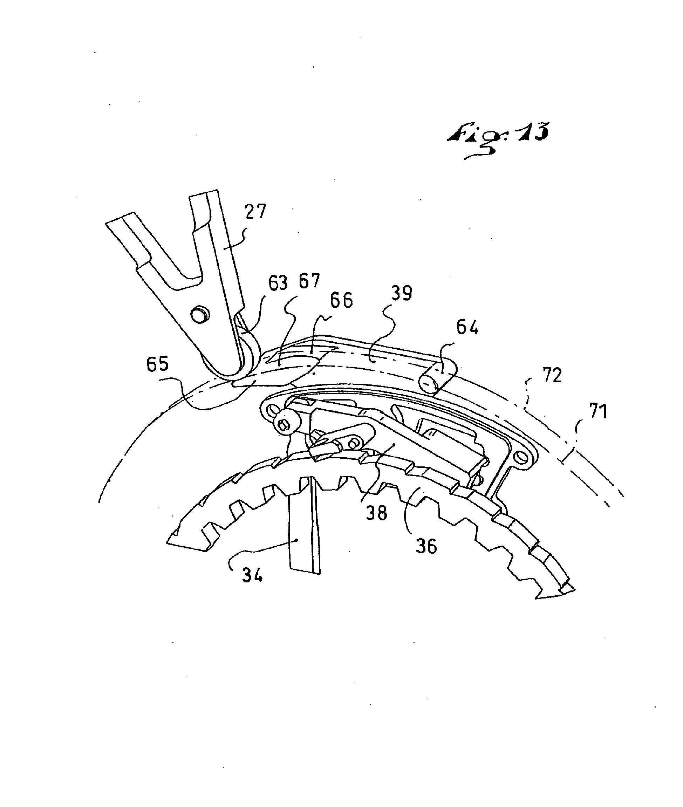

Nous avons vu plus haut que les deux ergots n'ont ni la même hauteur et ni la même forme. Ces formes et hauteurs sont choisies de telle façon que lorsque le couvercle 56 est en position rabattue (fig. 13 et fig. 14), le galet 63 est sur la première trajectoire circulaire, trajectoire sur laquelle il ne peut en aucun cas être en contact avec le premier ergot 64, du fait de la petite hauteur de ce dernier. Il peut cependant venir en contact avec la tête 67 du deuxième ergot 65.

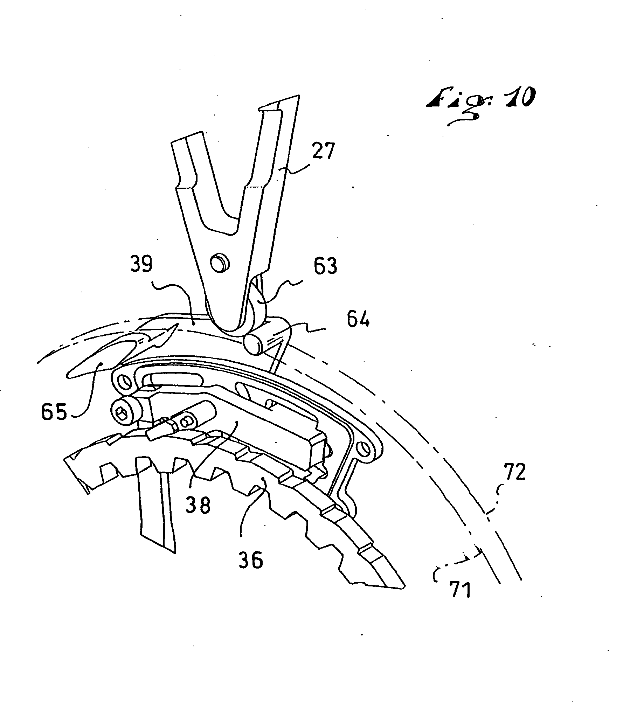

En revanche, lorsque le couvercle 56 est en position déployée (fig. 10 et fig. 11 ), le galet 63 est sur la deuxième trajectoire 72, trajectoire sur laquelle il est susceptible de venir en contact avec le premier ergot 64, mais ne peut pas venir au contact du deuxième ergot 65 du fait que la tige 66 se trouve en retrait par rapport à la tête 67.

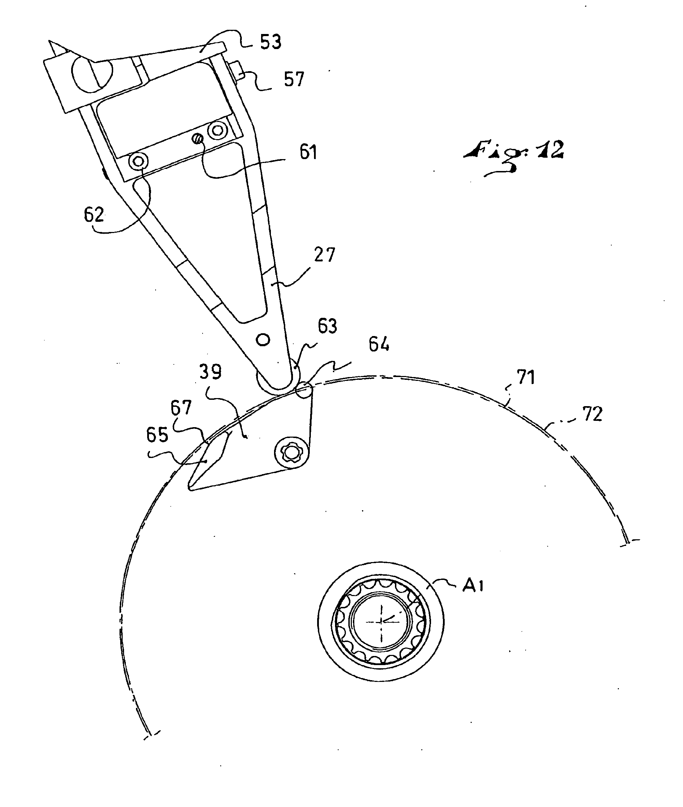

Un autre facteur entre en ligne de compte pour déterminer le contact éventuel entre le galet 63 et les ergots, il s'agit de la position de la came 39. Lorsque la came est en position basse (fig. 10, fig. 11 et fig. 12) le premier ergot 64 se trouve au-delà du diamètre des trajectoires circulaires, tandis que le deuxième ergot 65 se trouve en deçà de ces diamètres. Si bien que dans cette position, seul le premier ergot 64 est susceptible d'être contacté par le galet.

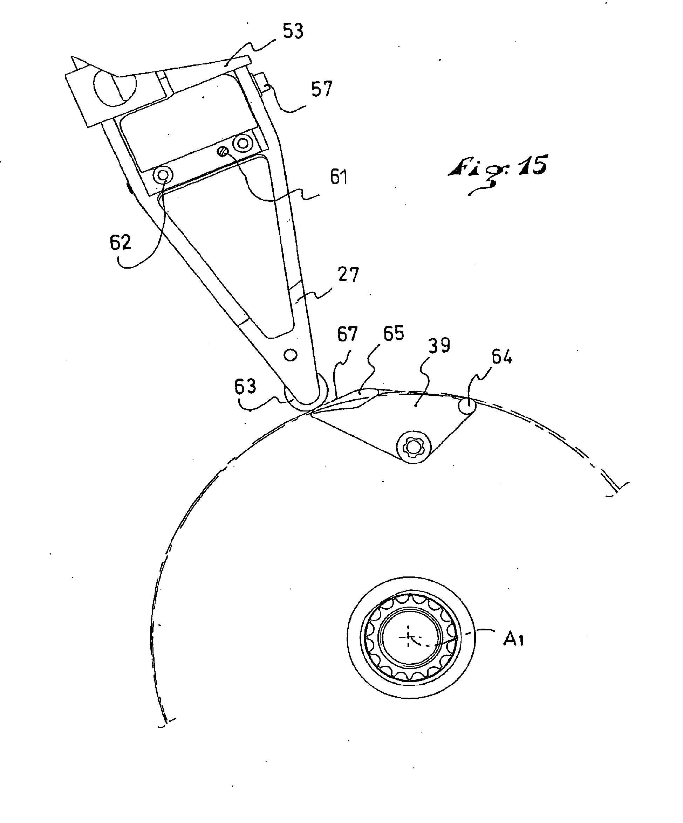

Dans la position haute de la came 39 (fig. 13, fig. 14 et fig. 15), l'inverse se produit et seul le deuxième ergot 65 est susceptible de venir au contact du galet 63.

Le fonctionnement des moyens de pilotage et des moyens de blocage va maintenant être décrit en détail en partant de l'état stable où le deuxième train d'engrenage est connecté c'est-à-dire où le pédalier est sur le deuxième rapport de transmission, le "grand rapport" (cf. fig. 7).

Dans cet état, la petite couronne 36 est bloquée par rapport au pédalier 5 par l'intermédiaire des cliquets pilotés 37. Pour ce faire, le doigt 38 et la came 39 doivent être en position basse (fig. 7 et fig. 10) de façon à ce que la palette 49 n'empêche pas le cliquet piloté 33 de descendre dans une des encoches 50' de la petite couronne.

Le couple donné par le cycliste au pédalier est transmis au plateau par l'intermédiaire du petit pignon 41. Comme le petit pignon 41, ainsi que le grand pignon 40, sont solidaires du plateau, ces trois éléments tournent ensemble à une vitesse 1, 24 fois plus rapide que celle du pédalier (Z2/Z4).

La grande couronne 35, qui est toujours en prise avec le grand pignon 40, est quant à elle entraînée par ce dernier à une vitesse relative par rapport à lui égale au rapport entre les dents du grand pignon et de la grande couronne (Z3/Z1). Elle se trouve donc en rotation libre par rapport au pédalier 5 à une vitesse égale à (Z2xZ3)/(Z4xZ1) qui vaut dans notre exemple 1,07 fois la vitesse du pédalier. Par conséquent, le cliquet libre 37 ne peut pas venir se bloquer dans une des encoches de la grande couronne 35. De fait, les deux cliquets libres 37 fonctionnent à la manière des cliquets présents dans des moyeux de roue à roue libre : ils oscillent et viennent rentrer puis sortir des encoches 50 de la grande couronne 35.

Dans cet état stable, la came 39 se trouve en position basse et le galet 63 parcourt la première trajectoire circulaire 71, correspondant à la position rabattue du couvercle 56. Par conséquent, au cours de la rotation du pédalier, le galet 63 n'entre en contact avec aucun des deux ergots.

Partant de cet état, alors que le cycliste pédale, une commande est passée de changement de rapport de transmission. Lorsque la commande est passée, les moyens de commande 70 soumettent le moteur 52 à une tension, afin d'en générer la rotation. La rotation de ce dernier, par l'intermédiaire de la biellette 58 et du coulisseau 59, amène le couvercle 56 en position déployée. Le galet 63 se retrouve alors à parcourir la deuxième trajectoire circulaire 72. A un certain moment de la rotation du pédalier le galet 63 rencontre le premier ergot 64. C'est ce moment précis qui est représenté aux figures 10, 11 et 12.

Pour pouvoir continuer la rotation du pédalier 5, le galet 63 exerce un effort sur le premier ergot 64 qui fait pivoter la came 39 de façon à faire passer l'ergot 64 en deçà du diamètre des trajectoires circulaires. Ce faisant il fait passer la came 39, et le doigt 38 en position haute.

Comme on l'a vu plus haut, lors de la rotation de la came vers sa position haute, la palette vient cueillir le cliquet piloté 33 pour le remonter et le sortir de l'encoche 50' de la petite couronne 36 où il se trouvait.

A ce moment, il n'y a plus de transmission de couple du pédalier 5 vers le plateau 17 au travers du deuxième train d'engrenage car la petite couronne est folle (libre de tourner) par rapport au pédalier. Il n'y a pas encore de transmission du couple au travers du premier train d'engrenage.

Dans cette phase intermédiaire, le pédalier tourne dans le sens de pédalage, mais le plateau 17 et avec lui les pignons qui lui sont solidaires, mais aussi les couronnes, qui sont folles, tournent moins vite que le pédalier.

Le différentiel de vitesse entre le pédalier 5 et la grande couronne 36 fait reculer celle-ci par rapport à celui-là. Dans ce mouvement de recul les cliquets libres 37 pénètrent dans la première encoche 50 qui se trouve sur leur chemin, poussés par leurs ressorts respectifs et ils s'y bloquent. Pour réduire cette phase intermédiaire à une durée minimale et pour éviter que la position des couronnes 35 et 36 ne soit aléatoire par rapport à la position du pédalier 5 au moment du changement de rapport de transmission, il faut s'assurer que N2/N1=Q pour avoir un parfait synchronisme. Cette condition est réalisée pour N1=29 dents et N2 = 31 dents. Ainsi, quelque soit l'encoche dont le cliquet 33 vient de se libérer parmi les 31 possibles référencées 50', la paire de cliquets 37 sera prêt à s'engager dans les encoches 50. Cette condition permet d'avoir une transition sans choc et à peine perceptible, alors que dans le cas contraire, la transition serait aléatoire et pourrait occasionner des chocs importants au moment de l'engagement des cliquets 37 dans les encoches 50 de la grande couronne.

Pour faciliter le positionnement des trains d'engrenages au montage, on choisit de préférence un nombre d'encoches N1 multiple ou diviseur entier du nombre de dents de la grande couronne Z1 et N2 multiple ou diviseur entier du nombre de dents de la petite couronne Z2.

Afin d'éviter de dégager le cliquet 33 sous un effort important et risquer de détériorer le mécanisme, il faut minimiser les efforts entre les couronnes et les cliquets. Pour ce faire, on privilégie une forme de cliquet neutre, c'est-à-dire ni engageant dans l'encoche de la couronne, ni dégageant. Il aura ainsi en son extrémité une portion cylindrique par rapport à son axe A3. De la même manière, pour privilégier l'engagement du cliquet de roue-libre 37 dans l'encoche, il aura une forme engageante, c'est-à-dire qu'en plus de l'effort du ressort, l'effort de la couronne 35 sur le cliquet 37 l'engagera au fond de l'encoche 50.

Pour minimiser les mêmes efforts entre les couronnes et les cliquets, les transitions se font à des moments synchronisés avec les point-mort haut et point-mort bas, car c'est à ces moments que le couple de pédalage est le plus faible. Cette synchronisation est réalisée en choisissant précisément l'emplacement des mécanismes d'actionnement des cliquets par rapport aux manivelles.

Une fois que la grande couronne est bloquée par rapport au pédalier 5, on se trouve dans un autre état stable du système dans lequel le premier train d'engrenage est connecté c'est-à-dire où le pédalier est sur le premier rapport de transmission, le « petit rapport ».

Dans cet état stable, la came 39 est en position haute et le galet 63 circule sur la deuxième trajectoire 72, le couvercle 56 étant en position déployée. Par conséquent, au cours de la rotation du pédalier le galet 63 ne rencontre ni le premier ni le deuxième ergot.

Le couple donné par le cycliste au pédalier est transmis au plateau par l'intermédiaire du grand pignon 40. Comme le grand pignon 40, ainsi que le petit pignon 41, sont solidaires du plateau, ces trois éléments tournent ensemble à une vitesse 1,16 fois plus rapide que le pédalier (Z1/Z3 = 58/50).

La petite couronne 36, qui est toujours en prise avec le petit pignon 41, est quant à elle entraînée par ce dernier à une vitesse relative par rapport à lui égale au rapport entre les dents du petit pignon et de la petite couronne (Z4/Z2). Elle se trouve donc en rotation libre par rapport au pédalier 5 à une vitesse égale à (Z4xZ1)/(Z2xZ3) qui vaut dans notre exemple 0,94 fois la vitesse du pédalier, c'est-à-dire à une vitesse inférieure à celle du pédalier.

Partant de cet état, alors que le cycliste pédale, une commande est passée de changement de rapport de transmission pour passer du "petit rapport" au "grand rapport". Le moteur fait passer le couvercle 56 de la position déployée à la position rabattue. Ce faisant, le galet 63 est amené sur la première trajectoire 71, laquelle est obstruée, du fait que la came 39 se trouve en position haute, par le deuxième ergot 65. Les figures 13, 14 et 15 représentent le dispositif juste au moment où le galet arrive au contact de la tête 66 du deuxième ergot 65.

Le deuxième ergot 65 possède une surface de roulage 68 sur laquelle vient presser le galet 63. Pour que le pédalier 5 puisse continuer sa rotation et ne soit gêné par le deuxième ergot 65, il faut que l'effort qu'exerce le galet sur la surface de roulage 68 fasse pivoter la came 39 pour faire passer le deuxième ergot 65 en deçà du diamètre des trajectoires circulaires. Ce faisant il fait passer la came 39, et le doigt 38 en position basse.

Lorsque le doigt 38 est en position basse, la palette 49 ne retient plus le cliquet piloté 33, lequel vient au contact de la petite couronne 36. Etant donné que celle-ci tourne à une vitesse inférieure à celle du pédalier, tout se passe comme si la petite couronne 36 "reculait" par rapport au pédalier 5. Par conséquent, le cliquet piloté va pouvoir venir s'encastrer dans la première des encoches ménagées sur la petite couronne qu'il rencontrera.

Dès que le cliquet pilotés se trouve en prise dans une encoche de la petite couronne 36, celle-ci est bloquée par rapport au pédalier 5. Si bien que le couple de pédalage passe instantanément au plateau 17 par l'intermédiaire du petit pignon 41. On se retrouve dans le premier état stable décrit plus haut, la grande couronne 35 se met alors à avancer plus rapidement que le pédalier 5 et elle passe en roue libre.

Afin de réduire au minimum la durée de cette transition, le jeu entre le cliquet 33 et la petite couronne 36 doit être suffisant pour qu'il puisse s'engager dans l'encoche 50' en un angle de rotation du pédalier minimal. L'idéal étant que le cliquet 33 soit déjà engagé avant d'arriver au contact avec l'encoche 50'.

On remarquera que dans le passage du "petit rapport" au "grand rapport", il n'y a pas de rupture dans la transmission du couple.

Nous allons maintenant voir l'avantage d'un dispositif de transmission pour cycle tel que celui du premier mode de réalisation de l'invention qui vient d'être décrit lorsque celui comprend en outre des moyens de changement de vitesse au niveau de la roue arrière d'un cycle.

Comme il a été dit plus haut, le dispositif de transmission selon l'invention est complété par une cassette de 8 pignons placée sur le moyeu de la roue arrière. L'anneau denté 19 comprenant 46 dents, on peut considérer, pour faire une comparaison avec un système classique, que le dispositif de transmission selon l'invention est équivalent à un dispositif à deux plateaux, un plateau de 53,36 dents (46 x 1,16) et un plateau de 57,04 dents (46 x 1,24).

On peut voir dans le tableau 3, qu'aucun des braquets n'est identique, contrairement à ce qui se passe dans l'art antérieur. D'autre part, la règle de changement des pignons et des plateaux pour obtenir une progression croissante et régulière du braquet est très simple. A chaque changement de braquet, il y a changement au niveau du pédalier, et une fois sur deux on change de pignons.

**Tableau 3**

| **N° braquet** | **Nombre de dents du Plateau** | **Nb. de dents du Pignon** | **Valeur du braquet** | **Ecarts** |
|---|---|---|---|---|
| 1 | 57,04 | 12 | 4,753 | |
| 2 | 53,36 | 12 | 4,447 | 6,90% |
| 3 | 57,04 | 14 | 4,074 | 9,14% |
| 4 | 53,36 | 14 | 3,811 | 6,90% |
| 5 | 57,04 | 16 | 3,565 | 6,91% |
| 6 | 53,36 | 16 | 3,335 | 6,90% |
| 7 | 57,04 | 18 | 3,169 | 5,24% |
| 8 | 53,36 | 18 | 2,964 | 6,90% |
| 9 | 57,04 | 21 | 2,716 | 9,14% |
| 10 | 53,36 | 21 | 2,541 | 6,90% |
| 11 | 57,04 | 24 | 2,377 | 6,91% |
| 12 | 53,36 | 24 | 2,223 | 6,90% |
| 13 | 57,04 | 28 | 2,037 | 9,14% |
| 14 | 53,36 | 28 | 1,906 | 6,90% |
| 15 | 57,04 | 32 | 1,783 | 6,91% |
| 16 | 53,36 | 32 | 1,668 | 6,90% |

On comprend tout l'intérêt d'un tel dispositif quand il s'agit de faciliter le changement de rapport pour le cycliste. Celui-ci dispose principalement de deux commandes: une commande de montée de rapport et une commande de descente. Les moyens de commandes vont automatiquement transmettre aux moyens de pilotage 26 et éventuellement au dérailleur arrière 8; les commandes d'actionnement adéquates. On comprend également l'intérêt d'utiliser l'électronique pour gérer la séquence et permettre d'avoir plusieurs moyens d'actionnement en parallèle : sur le cintre du guidon, sur les poignées et voire sur un prolongateur de triathlète.

On remarque également que la progression du braquet se fait de manière beaucoup plus régulière que dans le cas de l'art antérieur. En effet, les écarts en pourcentage entre un braquet et celui qui le précède dans la progression croissante ne dépassent pas 9,14 % et sont en moyenne égaux à 7,27 %.

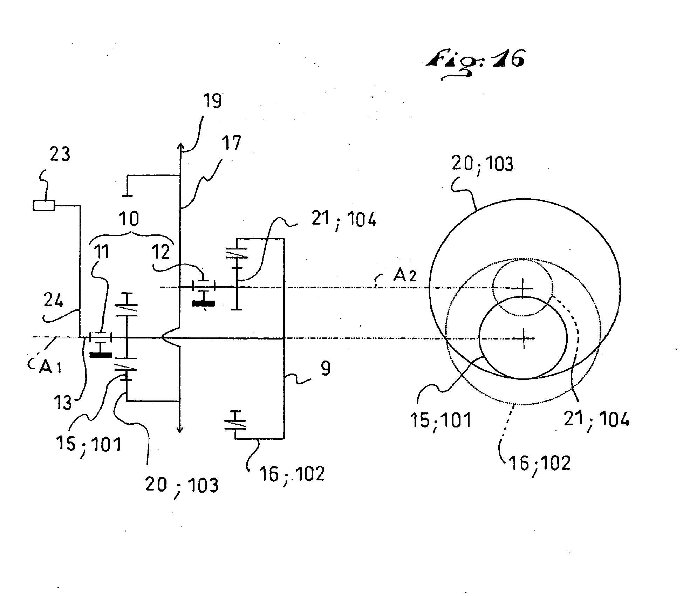

La figure 16 représente le schéma cinématique d'un deuxième mode de réalisation de l'invention. Conformément à l'invention le dispositif de transmission comprend un boitier 10 de pédalier, un pédalier 5 et un plateau 17.

Le boîtier 10 qui est fixe par rapport au cadre du cycle et qui est constitué par un corps principal 11 centré autour d'un premier axe A1 et un corps secondaire 12, centré autour d'un deuxième axe A2, ledit deuxième axe A2 étant parallèle mais non confondu audit premier axe A1.

Le pédalier 5 est monté par l'intermédiaire d'un arbre 13 de pédalier à l'intérieur du corps principal 11. Les manivelles 24, prévues pour recevoir chacune une pédale 23, sont également fixées sur l'arbre de pédalier (seule la manivelle droite est représentée à la figure 2.

Le pédalier comprend en outre un premier élément denté 15, centré sur l'axe A1, et un deuxième élément denté 16, également centré sur l'axe A1. Le premier élément denté 15 est constitué sous la forme d'un pignon à denture externe. Nous appellerons par la suite ce pignon, le pignon-101. Le deuxième élément denté 16 est constitué sous la forme d'une couronne à denture interne. Nous appellerons par la suite cette couronne, la couronne-102.

Le plateau 17 est monté rotatif selon le deuxième axe A2 par rapport au corps secondaire 11 par l'intermédiaire d'un moyeu central 18. Il comprend, en outre, un troisième élément denté 20, centré sur l'axe A2 et un quatrième élément denté 21, également centré sur l'axe A2. Le troisième élément denté 20 est constitué sous la forme d'une couronne à denture interne, la couronne 103. Le quatrième élément denté 21 est constitué sous la forme d'un pignon à denture externe, le pignon 104.

A tout moment, une des dents du premier élément denté 15, respectivement du deuxième élément denté 16, est en contact avec une des dents du troisième élément denté 20, respectivement du quatrième élément denté 21.

Un anneau denté 19 centré sur le deuxième axe A2, fixé sur le plateau 17, est apte à coopérer avec la chaîne de transmission reliant la zone de pédalage à un pignon arrière de la roue arrière.

Des moyens de blocage 22 débrayables sont ménagés pour bloquer alternativement la rotation du premier élément denté 15 par rapport au pédalier 5, le deuxième élément denté 16 restant libre de tourner, ou du deuxième élément denté 16 par rapport au pédalier, le premier élément denté restant libre de tourner. Comme sur le premier mode de réalisation, il est également tout à fait possible de bloquer la rotation d'un élément denté par rapport au plateau et d'un autre élément denté par rapport au pédalier 5.

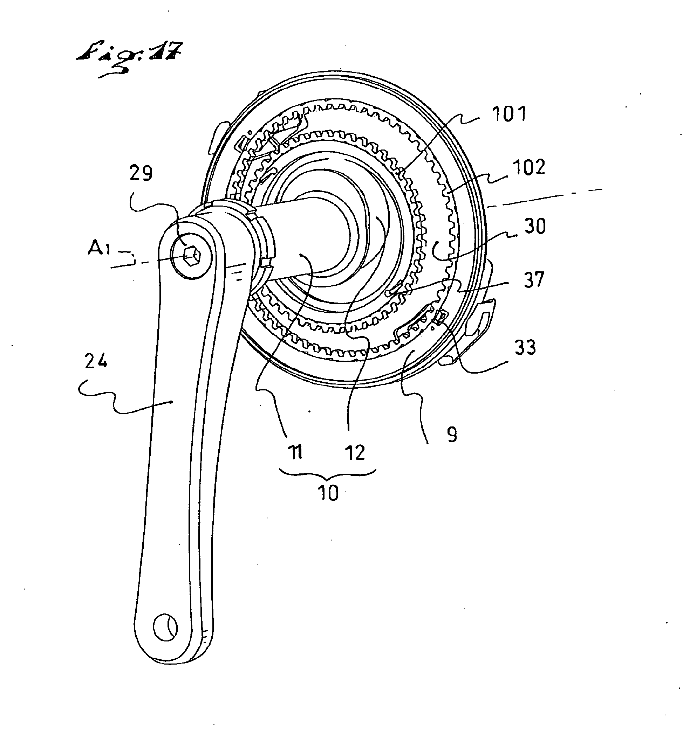

La figure 17 montre une vue en perspective (3/4 gauche) du "boîtier de pédalier" 10 et du premier sous-ensemble que constitue le pédalier 5. Le boîtier 10 comprend un corps principal 11 et un corps secondaire 12. Le corps principal 11 correspond à un boîtier de pédalier classique. Il s'agit d'une douille de forme cylindrique qui est insérée dans une ouverture de forme correspondante ménagée dans le cadre 2. Le corps secondaire 12 est placé dans la continuité du corps principal, sur son coté droit. Les contours extérieurs du corps secondaire prennent la forme d'un palet cylindrique dont l'axe est parallèle mais excentré d'une valeur E par rapport à l'axe du corps principal 11.

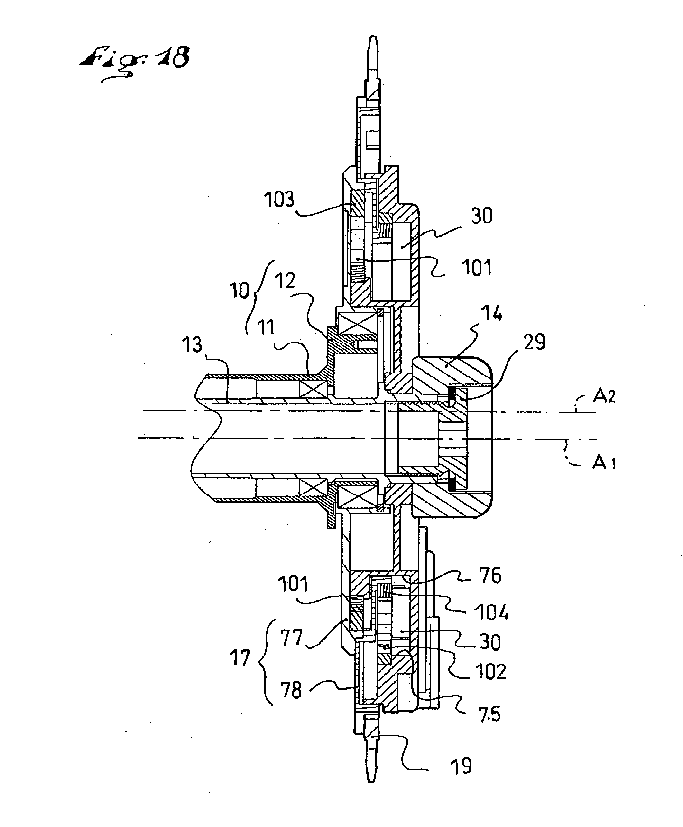

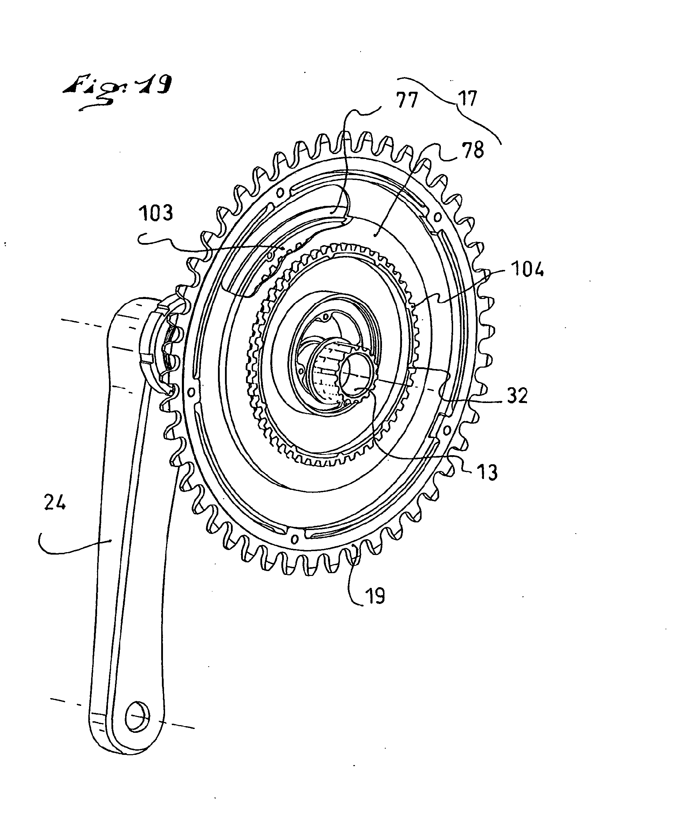

L'arbre 13 (cf. fig. 18 et 19) du pédalier 5 est monté à l'intérieur du boîtier 10, de manière connue grâce à des paliers à roulements. Les extrémités cannelées de l'arbre 13 dépassent de part et d'autre du boîtier, elles servent à solidariser en rotation les manivelles et la platine 9. La manivelle gauche 24, visible sur la figure 17 est fixée de manière connue sur l'arbre 13 par l'intermédiaire de la vis 29. La manivelle droite 14, visible sur la figure 3 est également fixée grâce à une vis. La platine 9 est "prise en sandwich" entre un épaulement ménagé sur l'arbre 13 et la manivelle droite 14.

Comme on peut le voir aux figures 17 et 18, la platine 9 comprend, sur sa face gauche, une grande cuvette 30 de forme annulaire, centrée sur l'axe A1.

Le deuxième élément denté 16 (c'est-à-dire la couronne 102) est inséré à la périphérie de la grande cuvette 30, sur la paroi latérale périphérique 75 de celle-ci. La couronne 102 est libre de pouvoir tourner dans la cuvette par rapport au pédalier 5.

La paroi latérale centrale 76 de la cuvette 30 se prolonge, vers la gauche, au-delà de la paroi latérale périphérique 75. Elle porte, à son extrémité gauche, une surface cylindrique centrée sur l'axe A1 qui est prévue pour recevoir le premier élément denté 15 (c'est-à-dire le pignon 101). Le pignon 101 est libre de pouvoir tourner sur la surface cylindrique par rapport au pédalier 5.

Pour les besoins de l'assemblage, le plateau 17 comprend deux demi-plateaux: le demi-plateau gauche 77 qui est monté rotatif sur le corps secondaire 12 par l'intermédiaire d'un roulement et le demi-plateau droit 78, solidaire du précédent, et sur lequel est fixé l'anneau denté 19.

Le troisième élément denté 20 (c'est-à-dire la couronne 103) est solidaire du demi-plateau gauche 77, tandis que le demi-plateau droit 78 porte le quatrième élément denté 21 (pignon 104). Des encastrements en demi-lune sont prévus pour solidariser pignon 104 et demi-plateau droit 78 ainsi que couronne 103 et demi-plateau gauche comme cela est visible à la figure 19.

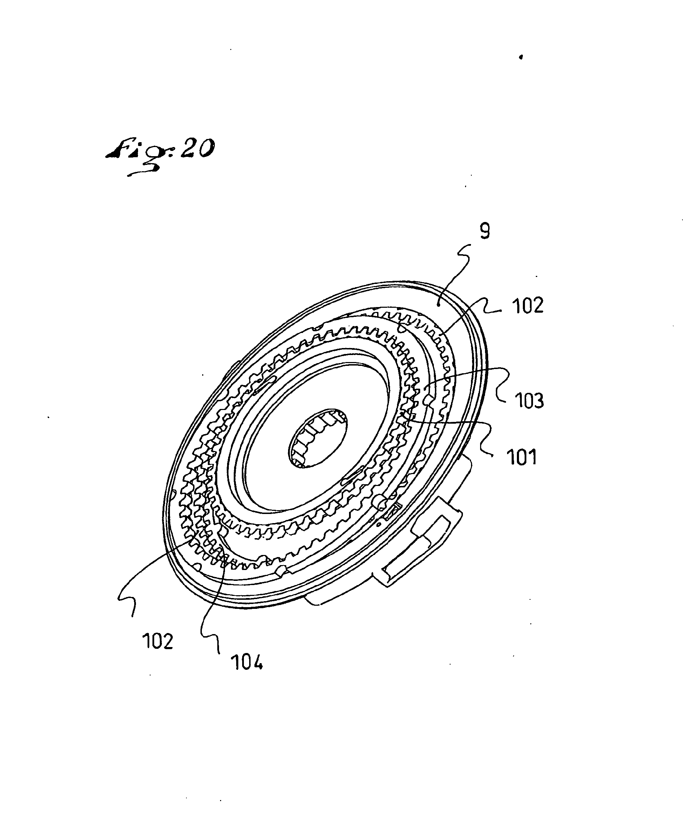

La figure 20 montre principalement, en perspective vue de la gauche, la platine 9, les couronnes et les pignons. Le pignon 101 et la couronne 103 sont destinés à engrener ensemble et constituent le premier train d'engrenage, tandis que la couronne 102 et le pignon 104 constituent le deuxième train.

On appelle respectivement R1, R2, R3, R4 les rayons primitifs du premier, deuxième, troisième, quatrième élément denté; Z1, Z2, Z3 et Z4 leur nombre de dents; respectivement k1 = Z1/Z3, k2 = Z2/Z4, les rapports de transmission du premier train, du deuxième train; et respectivement m1, m2 les modules du premier, du deuxième train.

Bien entendu compte tenu de la disposition géométrique des pignons et des couronnes, les différences "R1 - R3" et "R2 - R4" sont égales à la valeur de l'excentricité E.

Dans le deuxième mode de réalisation de l'invention on choisi les modules m1 et m2 de telle façon que le quotient Q des rapports de transmission k1 et k2 (Q=k2/k1) soit de même ordre que celui existant dans un double plateau classique, c'est-à-dire par exemple compris entre 1,15 et 1,5.

Dans l'exemple décrit ici, on a choisi pour modules m1 et m2 une même valeur de 1,875 mm, les rayons primitifs R1 et R2 égaux à 45 mm et 56,25 mm et les rayons primitifs R3 et R4 égaux à 52,5 mm et 48,75 mm. Par conséquent le pignon 101 comprend Z1 = 48 dents et la couronne 102 en comprend Z2 = 60, tandis que la couronne 103 comprend Z3 = 56 dents et le pignon 104 en comprend Z4 = 52 dents. Dans ces conditions le rapport de transmission du 1^{er} train d'engrenage vaut k1 = 0,86 ; celui du 2^{ème} train vaut k2 = 1,15 et le quotient Q vaut environ 1,34.

Toutes les valeurs précédentes constituent des choix particulièrement avantageux pour la réalisation d'un dispositif de transmission selon l'invention. Elles sont reprises dans le tableau 4

**Tableau 4**

| | | **pédalier** | **plateau** |
|---|---|---|---|
| | | 1^{er} élément denté (pignon 101) | 3^{ème} élément denté (couronne 103) |
| "Petit rapport" | Rayon | R₁ = 45 mm | R₃ = 52,5 mm |
| | Nbre de dents | Z₁ = 48 | Z₃ = 56 |
| | Module | m1 = 1,875 | |
| | Rapport de transmission | K₁ = 48/56 = 6/7 = 0,857... | |
| | Encoches roue libre | N₁ = 26 | |
| | | 2^{ème} élément denté (couronne 102) | 4^{ème} élément denté (pignon 104) |
| "Grand rapport" | Rayon | R₂ = 56,25 mm | R₄ = 48,75 mm |
| | Nbre de dents | Z₂ = 60 | Z₄ = 52 |
| | Module | m2 = 1,875 | |
| | Rapport de transmission | K₂ = 60/52 = 15/13 = 1,153... | |
| | Encoches roue libre | N₂ = 35 | |
| Quotient des rapports de transmission | | Q = K2/K1 = (15x7)/(13x6) = 35/26 = N2/N1 | |

Conformément à l'invention, le dispositif de transmission comprend également des moyens de blocage 22 débrayable alternatif de la couronne 102 ou du pignon 101 par rapport à la platine 9 du pédalier 5. Les moyens de blocage 22 sont constitués par la coopération de plusieurs cliquets avec des encoches ménagées sur le pourtour de la couronne 102 et du pignon 101.

Comme dans le premier mode de réalisation, les moyens de blocage débrayables sont constitués par des roues libres ménagées entre le pignon 101, respectivement la couronne 102, et la platine 9.

Les moyens de blocage 22 comprennent une paire de cliquets libres 37 coopérant avec des encoches ménagées à l'intérieur du pignon 101 et une paire de cliquets pilotés 33 coopérant avec des encoches ménagées à la périphérie de la couronne 102. Comme dans le premier mode de réalisation, ces cliquets sont engagés dans les encoches par des ressorts.

Une paire de mécanisme d'actionnement 28, sensiblement identiques à ceux décrits en référence au premier mode de réalisation de l'invention sont placés sur la platine afin d'actionner les cliquets pilotés 33. Ces mécanismes d'actionnement sont également calés angulairement sur les points morts hauts et bas pour minimiser l'effort sur les cliquets pilotés 33 et avoir une transition plus douce. De même que précédemment, les cliquets 33 sont idéalement neutres et les cliquets 37 idéalement engageants. Ceux-ci ne seront pas décrits en détail par la suite. De même, qu'on ne décrira pas les moyens de pilotage et les moyens de commande fixés sur le cadre.

Avantageusement, le dispositif de transmission selon le deuxième mode de réalisation pourra se substituer à un pédalier comprenant deux plateaux dentés classiques pour lequel le passage de la chaîne de transmission d'un plateau à l'autre se fait grâce à un dérailleur avant semblable à ceux de l'art antérieur. Par exemple, dans le cas où, l'anneau denté 19 comporte 46 dents, le dispositif de transmission se substitue à un pédalier comportant un petit plateau d'environ 39 dents (46 x 0,857) et un grand plateau d'environ 53 dents (46 x 1,15).

On remarquera que, à la différence d'un double plateau classique, dans le dispositif selon l'invention, le changement de rapport ne requiert qu'un travail mécanique limité (le passage du couvercle 56 de la position rabattue à la position déployée), si bien que ce passage peut être facilement automatisé par des moyens électriques et ce pour une dépense énergétique minime. On précise également que le changement de rapport pourra être commandé de manière mécanique avec un système connu par tension de câble.

Une version alternative du deuxième mode de réalisation pourra se substituer à un triple plateau classique. Pour ce faire, deux éléments dentés supplémentaires sont nécessaires de façon à constituer un troisième train d'engrenage. Les moyens de blocages peuvent alors comprendre deux paires de cliquets pilotables associées à deux des trains d'engrenages et une paire de cliquets libres associés au troisième train d'engrenage.

Bien entendu l'invention n'est pas limitée aux formes de réalisation qui viennent d'être décrites, et comprend tous les équivalents techniques pouvant entrer dans la portée des revendications. Bien que les modes de réalisation décrits plus haut ne concernent que des bicyclettes dont le couple moteur est généré par les jambes du cycliste, on comprendra aisément qu'on pourra utiliser un dispositif selon l'invention pour tout cycle (tricycle, quadricycle, ...) et quelque soit l'origine du couple moteur (jambe, bras, etc...).

## Revendications

1. Dispositif de transmission pour cycle **caractérisé en ce qu'**il comprend:
- un boitier de pédalier fixe (10) par rapport au cadre du cycle et comprenant un corps principal (11) cylindrique centré autour d'un premier axe A1 et un corps secondaire (12), centré autour d'un deuxième axe A2, ledit deuxième axe A2 étant parallèle mais non confondu avec ledit premier axe A1;
- un pédalier (5) monté rotatif selon le premier axe A1 par rapport audit corps principal (11) et comprenant: une paire de manivelle (14, 24), un premier élément denté (15) circulaire et un deuxième élément denté (16) circulaire, tous deux centrés sur le deuxième axe A2;
- un plateau (17) monté rotatif selon le deuxième axe A2 par rapport au corps secondaire (12) et comprenant un troisième élément denté (20) circulaire et un quatrième élément denté (21) circulaire, tous deux centrés sur l'axe A2;
- ledit premier élément denté (15) et ledit troisième élément denté (20), respectivement ledit deuxième élément denté (16) et ledit quatrième élément denté (21), constituant un premier train d'engrenage, respectivement un deuxième train d'engrenage;
- des moyens de blocage (22) débrayables sont prévus pour bloquer alternativement d'une part, la rotation du premier élément denté (15) par rapport au pédalier (5) ou la rotation du troisième élément denté (20) par rapport au plateau (17) et d'autre part, la rotation du deuxième élément denté (16) par rapport au pédalier (5) ou la rotation du quatrième élément denté (21) par rapport au plateau (17), **caractérisé en ce que** l'un au moins desdits premier, deuxième, troisième et quatrième éléments dentés étant un élément à denture interne.

2. Dispositif selon la revendication 1, **caractérisé en ce que** les moyens de blocage (22) débrayable comprennent au moins un premier et un deuxième cliquet qui coopèrent avec une pluralité d'encoches (50, 50'); ledit premier cliquet (33) permettant la rotation unidirectionnelle dudit premier élément denté (15) par rapport au pédalier (5) ou dudit troisième élément denté (20) par rapport au plateau (17), et ledit deuxième cliquet (37) permettant la rotation unidirectionnelle dudit deuxième élément denté (16) par rapport au pédalier (5) ou du quatrième élément denté (21) par rapport au plateau (17).

3. Dispositif selon la revendication 2, **caractérisé en ce que** l'un des, au moins deux, cliquets est un cliquet piloté (33) par des moyens de pilotage commandable par l'utilisateur et **en ce que** l'autre desdits, au moins deux, cliquet est un cliquet libre (37).

4. Dispositif selon la revendication 3, **caractérisé en ce qu'**il comprend un mécanisme d'actionnement (28) dudit cliquet piloté (33), lequel mécanisme comprenant une palette (49) prévue pour sortir ledit cliquet piloté d'une position en prise dans une desdites encoche (50') ainsi qu'une came pouvant prendre deux positions stables sous l'action desdits moyens de pilotage.

5. Dispositif selon l'une des revendications 1 à 4, **caractérisé en ce que** ledit premier élément denté (15) est une grande couronne (35) à denture interne, ledit deuxième élément denté (16) est une petite couronne (36) à denture interne, ledit troisième élément denté (20) est un grand pignon (40) à denture externe et ledit quatrième élément denté (21) est un petit pignon (41) à denture externe.

6. Dispositif selon la revendication 5, **caractérisé en ce que** ladite pluralité d'encoches (50, 50') est placée d'une part sur la grande couronne et d'autre part sur ladite petite couronne.

7. Dispositif selon la revendication 5, **caractérisé en ce que** ladite grande couronne (35), ladite petite couronne (36), ledit grand pignon (40) et ledit petit pignon (41) comprennent respectivement cinquante-huit, trente-et-une, cinquante et vingt-cinq dents.

8. Dispositif selon l'une des revendications 1 à 4, **caractérisé en ce que** ledit premier élément denté (15) est un pignon (101) à denture externe, le deuxième élément denté (16) est une couronne (102) à denture interne, le troisième élément denté (20) est une couronne (103) à denture interne et le quatrième (21) est un pignon (104) à denture externe.

9. Dispositif selon la revendication 8, **caractérisé en ce que** ladite pluralité d'encoches (50, 50') est placée d'une part sur le troisième élément denté (20) et d'autre part sur le quatrième élément denté (21).

10. Dispositif selon la revendication 8, **caractérisé en ce que** le premier élément denté (15), le deuxième élément denté (16), le troisième élément denté (20) et le quatrième élément denté (21) comprennent respectivement quarante-huit, soixante, cinquante-six et cinquante-deux dents.

11. Cycle équipé d'un dispositif de transmission selon l'une des revendications 1 à 10.

## Claims

1. Bicycle transmission device, **characterized in that** it comprises:
- a bottom bracket (10) fixed with respect to the bicycle frame and comprising a cylindrical main body (11) centred about a first axis A1 and a secondary body (12) centred about a second axis A2, the said second axis A2 being parallel to but not coincident with the said first axis A1;
- a crankset (5) mounted to rotate about the first axis A1 with respect to the said main body (11) and comprising: a pair of cranks (14, 24), a circular first toothed element (15) and a circular second toothed element (16), both centred on the second axis A2;
- a chain ring (17) mounted to rotate about the second axis A2 with respect to the secondary body (12) and comprising a circular third toothed element (20) and a circular fourth toothed element (21), both centred on the axis A2;
- the said first toothed element (15) and the said third toothed element (20) and respectively the said second toothed element (16) and the said fourth toothed element (21) constituting a first gearset and, respectively, a second gearset;
- disengageable locking means (22) are provided in order alternately to block, on the one hand, the rotation of the first toothed element (15) with respect to the crankset (5) or the rotation of the third toothed element (20) with respect to the chain ring (17) and, on the other hand, the rotation of the second toothed element (16) with respect to the crankset (5) or the rotation of the fourth toothed element (21) with respect to the chain ring (17), **characterized in that** at least one of the said first, second, third and fourth toothed elements is an element with internal teeth.

2. Device according to Claim 1, **characterized in that** the disengageable locking means (22) comprise at least a first pawl and a second pawl which collaborate with a plurality of notches (50, 50'); the said first pawl (33) allowing the said first toothed element (15) to rotate in one direction with respect the crankset (5) or the said third toothed element (20) to rotate in one direction with respect to the chain ring (17), the said second pawl (37) allowing the said second toothed element (16) to rotate in one direction with respect to the crankset (5) or allowing the fourth toothed element (21) to rotate in one direction with respect to the chain ring (17).

3. Device according to Claim 2, **characterized in that** one of the at least two pawls is a controlled pawl (33) controlled by means that the user can operate, and **in that** the other of the said at least two pawls is a free pawl (37).

4. Device according to Claim 3, **characterized in that** it comprises an actuating mechanism (28) for actuating the said controlled pawl (33), which mechanism comprises a tab (49) designed to extract the said controlled pawl from a position of engagement in one of the said notches (50') and a cam capable of adopting two stable positions under the action of the said control means.

5. Device according to one of Claims 1 to 4, **characterized in that** the said first toothed element (15) is a large annulus gear (35) with internal teeth, the said second toothed element (16) is a small annulus gear (36) with internal teeth, the said third toothed element (20) is a large cog (40) with external teeth and the said fourth toothed element (21) is a small cog (41) with external teeth.

6. Device according to Claim 5, **characterized in that** the said plurality of notches (50, 50') is situated firstly on the large annulus gear and secondly on the said small annulus gear.

7. Device according to Claim 5, **characterized in that** the said large annulus gear (35), the said small annulus gear (36), the said large cog (40) and the said small cog (41) respectively comprise fifty-eight, thirty-one, fifty and twenty-five teeth.

8. Device according to one of Claims 1 to 4, **characterized in that** the said first toothed element (15) is a cog (101) with external teeth, the second toothed element (16) is an annulus gear (102) with internal teeth, the third toothed element (20) is an annulus gear (103) with internal teeth and the fourth (21) is a cog (104) with external teeth.

9. Device according to Claim 8, **characterized in that** the said plurality of notches (50, 50') is placed on the one hand on the third toothed element (20) and on the other hand on the fourth toothed element (21).

10. Device according to Claim 8, **characterized in that** the first toothed element (15), the second toothed element (16), the third toothed element (20) and the fourth toothed element (21) respectively comprise forty-eight, sixty, fifty-six and fifty-two teeth.

11. Cycle equipped with a transmission device according to one of Claims 1 to 10.

## Patentansprüche

1. Getriebevorrichtung für ein Fahrrad, **dadurch gekennzeichnet, dass** sie Folgendes enthält:
- ein Innenlager (10), das bezüglich des Rahmens des Fahrrads ortsfest ist und einen zylindrischen Hauptkörper (11), der um eine erste Achse A1 zentriert ist, und einen Sekundärkörper (12) enthält, der um eine zweite Achse A2 zentriert ist, wobei die zweite Achse A2 zur ersten Achse A1 parallel ist aber nicht mit ihr zusammenfällt;
- ein Tretlager (5), das gemäß der ersten Achse A1 bezüglich des Hauptkörpers (11) drehbar montiert ist und Folgendes enthält: ein Kurbelpaar (14, 24), ein erstes kreisförmiges gezahntes Element (15) und ein zweites kreisförmiges gezahntes Element (16), die beide auf die zweite Achse A2 zentriert sind;
- eine Platte (17), die gemäß der zweiten Achse A2 bezüglich des Sekundärkörpers (12) drehbar montiert ist und ein drittes kreisförmiges gezahntes Element (20) und ein viertes kreisförmiges gezahntes Element (21) enthält, die beide auf die Achse A2 zentriert sind;
- wobei das erste gezahnte Element (15) und das dritte gezahnte Element (20), bzw. das zweite gezahnte Element (16) und das vierte gezahnte Element (21) ein erstes Zahnradgetriebe bzw. ein zweites Zahnradgetriebe bilden;
- auskuppelbare Blockiereinrichtungen (22), die vorgesehen sind, um alternativ einerseits die Drehung des ersten gezahnten Elements (15) bezüglich des Tretlagers (5) oder die Drehung des dritten gezahnten Elements (20) bezüglich der Platte (17) und andererseits die Drehung des zweiten gezahnten Elements (16) bezüglich des Tretlagers (5) oder die Drehung des vierten gezahnten Elements (21) bezüglich der Platte (17) zu blockieren,
**dadurch gekennzeichnet, dass** mindestens eines der ersten, zweiten, dritten und vierten gezahnten Elemente ein Element mit Innenzahnung ist.

2. Vorrichtung nach Anspruch 1, **dadurch gekennzeichnet, dass** die auskuppelbaren Blockiereinrichtungen (22) mindestens eine erste und eine zweite Sperrklinke enthalten, die mit einer Vielzahl von Kerben (50, 50') zusammenwirken; wobei die erste Sperrklinke (33) die unidirektionale Drehung des ersten gezahnten Elements (15) bezüglich des Tretlagers (5), oder des dritten gezahnten Elements (20) bezüglich der Platte (17) erlaubt, und die zweite Sperrklinke (37) die unidirektionale Drehung des zweiten gezahnten Elements (16) bezüglich des Tretlagers (5), oder des vierten gezahnten Elements (21) bezüglich der Platte (17) erlaubt.

3. Vorrichtung nach Anspruch 2, **dadurch gekennzeichnet, dass** eine der mindestens zwei Sperrklinken eine Sperrklinke (33) ist, die von Steuereinrichtungen gesteuert wird, welche vom Benutzer bedient werden können, und dass die andere der mindestens zwei Sperrklinken eine freie Sperrklinke (37) ist.

4. Vorrichtung nach Anspruch 3, **dadurch gekennzeichnet, dass** sie einen Betätigungsmechanismus (28) der gesteuerten Sperrklinke (33) enthält, wobei der Mechanismus einen zapfen (49), der vorgesehen ist, um die gesteuerte Sperrklinke aus einer Stellung in Eingriff in einer der Kerben (50') zu entfernen, sowie eine Nocke enthält, die unter der Einwirkung der Steuereinrichtungen zwei stabile Stellungen einnehmen kann.

5. Vorrichtung nach einem der Ansprüche 1 bis 4, **dadurch gekennzeichnet, dass** das erste gezahnte Element (15) ein großer Kranz (35) mit Innenzahnung ist, wobei das gezahnte Element (16) ein kleiner Kranz (36) mit Innenzahnung ist, wobei das dritte gezahnte Element (20) ein großes Ritzel (40) mit Außenzahnung ist, und das vierte gezahnte Element (21) ein kleines Ritzel (41) mit Außenzahnung ist.

6. Vorrichtung nach Anspruch 5, **dadurch gekennzeichnet, dass** die Vielzahl von Kerben (50, 50') einerseits auf dem großen Kranz und andererseits auf dem kleinen Kranz angeordnet ist.

7. Vorrichtung nach Anspruch 5, **dadurch gekennzeichnet, dass** der große Kranz (35), der kleine Kranz (36), das große Ritzel (40) und das kleine Ritzel (41) achtundfünfzig, einunddreißig, fünfzig bzw. fünfundzwanzig Zähne aufweisen.

8. Vorrichtung nach einem der Ansprüche 1 bis 4, **dadurch gekennzeichnet, dass** das erste gezahnte Element (15) ein Ritzel (101) mit Außenzahnung, das zweite gezahnte Element (16) ein Kranz (102) mit Innenzahnung, das dritte gezahnte Element (20) ein Kranz (103) mit Innenzahnung und das vierte (21) ein Ritzel (104) mit Außenzahnung ist.

9. Vorrichtung nach Anspruch 8, **dadurch gekennzeichnet, dass** die Vielzahl von Kerben (50, 50') einerseits auf dem dritten gezahnten Element (20) und andererseits auf dem vierten gezahnten Element (21) angeordnet ist.

10. Vorrichtung nach Anspruch 8, **dadurch gekennzeichnet, dass** das erste gezahnte Element (15), das zweite gezahnte Element (16), das dritte gezahnte Element (20) und das vierte gezahnte Element (21) achtundvierzig, sechzig, sechsundfünfzig bzw. zweiundfünfzig Zähne aufweisen.

11. Fahrrad, das mit einer Getriebevorrichtung nach einem der Ansprüche 1 bis 10 ausgestattet ist.
